# EUROPEAN PATENT APPLICATION

(11) **EP 4 542 891 A1**
(43) Date of publication of application: **23.04.2025**
(21) Application number: 22946588.5
(22) Date of filing: 15.11.2022
(51) Int. Cl.: H04K 3/00

(54) **PORTABLE FREQUENCY INTERFEROMETER**

(30) Priority: 14.06.2022 CN 202210665073; 14.06.2022 CN 202210665019; 29.07.2022 CN 202210910547; 29.07.2022 CN 202210910544; 29.07.2022 CN 202210908235
(71) Applicant: Shenzhen AWP Technology Co., Ltd., Shenzhen, Guangdong 518055 (CN)
(72) Inventor: BIE, Tijun, Shenzhen, Guangdong 518055 (CN); ZHANG, Weisheng, Shenzhen, Guangdong 518055 (CN); LU, Hongcai, Shenzhen, Guangdong 518055 (CN)
(74) Representative: Agca Kizil, Tugce
(86) International application number: PCT/CN2022/132097
(87) International publication number: WO 2023/240922

(57) **Abstract**

The present invention relates to a portable frequency jammer. The portable frequency jammer includes a host and an antenna module, the host includes a housing and at least one functional module provided in the housing, the at least one functional module is used to generate an interference signal within at least one frequency band; the antenna module is positioned outside the housing and integrally connected to the housing, the antenna module includes at least one antenna, and the at least one antenna is communicatively connected to the at least one functional module respectively. Since the antenna module of the portable frequency jammer in the present invention is provided outside the housing and integrally connected to the host, there is no need to repeatedly disassemble and assemble the antenna, thus having the advantages of saving time and labor and having a fast response speed.

## Description

The present invention claims priority of the following Chinese Patent applications filed to the China National Intellectual Property Administration: the Chinese Patent application No. 202210665019.2 filed on June 14, 2022, the Chinese Patent application No. 202210665073.7 filed on June 14, 2022, the Chinese Patent application No. 202210908235.5 filed on July 29, 2022, the Chinese Patent application No. 202210910544.6 filed on July 29, 2022, and the Chinese Patent application No. 202210910547.X filed on July 29, 2022; the title of all the above - mentioned patents is "PORTABLE FREQUENCY INTERFEROMETER" , the entire contents of which are incorporated herein by reference.

### FIELD

The present invention relates to the technical field of communication, and in particularly to a portable frequency jammer.

### BACKGROUND

The antennas of the portable frequency jammers in the related art are usually screwed onto the host through threads. It takes several turns to screw the antenna onto the host. To some extent, such portable frequency jammers can achieve the effect of frequency interference. However, the process of screwing on the antennas is very time-consuming and laborious, and it's easy to connect the antennas wrongly. Additionally, in situations where a quick response is required, such as interfering with drones, the response speed of these equipment will be very slow and it can't meet the requirements of the work.

### SUMMARY

The technical problem to be solved by the present invention lies in providing an improved portable frequency jammer.

The technical solution adopted by the present invention to solve its technical problems is to provide a portable frequency jammer, which includes:
a host, including:
a housing; and
a functional module assembly, provided in the housing, the functional module assembly includes at least one functional module for generating an interference signal within at least one frequency band; and
an antenna module, positioned outside the housing and integrally connected to the host, the antenna module includes:
at least one first antenna, communicatively connected to the at least one functional module to transmit the interference signal.

In some embodiments, the antenna module is movably connected to the housing.

In some embodiments, the antenna module is movably connected to the host, and transitioned back and forth between at least one working state and one stowed state relative to the host.

In some embodiments, the antenna module is flipably connected to the host.

In some embodiments, the antenna module is slidably connected to the host.

In some embodiments, the at least one functional module comprises multiple functional modules for generating interference signals within different frequency bands; the antenna module comprises a shell movably connected to the host, the at least one first antenna comprises multiple first antennas, the multiple first antennas are provided in the shell, and communicatively connected with the multiple functional modules respectively.

In some embodiments, some or all of the multiple first antennas are microstrip antennas or printed circuit board patch antennas.

In some embodiments, the multiple first antennas are arranged in parallel and at intervals within the shell.

In some embodiments, the multiple first antennas are arranged in a staggered manner in height in the shell.

In some embodiments, the antenna module comprises at least one second antenna, the at least one second antenna is detachably or non-detachably connected to the shell, and communicatively connected to at least one of the multiple first antennas.

In some embodiments, a thickness of an inner cavity of the shell is less than or equal to 50mm.

In some embodiments, the multiple first antennas are all in the shape of rectangular sheets, and the multiple first antennas are arranged in parallel and at intervals along a width direction of the shell.

In some embodiments, the shell comprises an antenna connector, the antenna connector is provided on a top side of the shell, the antenna module comprises a second antenna, the second antenna is provided on the outside of the shell, and detachably communicatively connected to the antenna connector.

In some embodiments, the antenna connector is connected to a first antenna with the lowest frequency band within the shell; and the second antenna is in a columnar shape.

In some embodiments, the shell comprises several clamping members, the several clamping members are distributed at intervals along a length direction of one side of the outside of the shell to form a longitudinally elongated receiving groove for receiving the second antenna when the portable frequency jammer is not in use.

In some embodiments, the shell comprises a lower shell and an upper shell provided opposite to the lower shell, multiple support assemblies are formed on a surface of the lower shell opposite to the upper shell, and the multiple first antennas are fixed on the multiple support assemblies respectively.

In some embodiments, heights of the multiple support assemblies are not equal.

In some embodiments, each support assembly comprises multiple support columns arranged at intervals.

In some embodiments, the portable frequency jammer comprises a signal transmission assembly, the antenna module is communicatively connected to the host through the signal transmission assembly; the signal transmission assembly comprises multiple signal wires, and the multiple signal wires communicatively connect the multiple functional modules to the multiple first antennas respectively.

In some embodiments, the shell comprises at least one wire clamp and at least one first wiring hole, the at least one first wiring hole is provided on a bottom side of the shell, the at least one wire clamp is installed in the shell, and corresponds to the at least one first wiring hole, the at least one wire clamp tightly clamps the multiple signal wires, and the multiple signal wires are passed through the first wiring hole and communicatively connected to the multiple functional modules.

In some embodiments, a direction in which each signal wire is routed out from the host and a direction in which each signal wire is routed out from the antenna module are coplanar and intersect or do not intersect at a rotation axis around which the antenna module flips relative to the host.

In some embodiments, the signal wires are configured that the signal wires are close to a straight line when the antenna module is at 90 degrees relative to the host.

In some embodiments, the signal transmission assembly comprises at least one protective sleeve sleeved on the multiple signal wires, the at least one protective sleeve is sealed in a waterproof manner at one end to the host, and sealed in a waterproof manner at another end to the antenna module.

In some embodiments, the housing comprises a second wiring hole; one end of the multiple signal wires is passed through the second wiring hole and connected to the functional module assembly, another end of the multiple signal wires is passed through the first wiring hole and connected to the multiple first antennas; one end of the at least one protective sleeve is fixed on the housing and covers the second wiring hole, and another end is fixed on the shell and covers the first wiring hole.

In some embodiments, the at least one protective sleeve comprises a first head and a second head, the first head is in an annular shape and covers the second wiring hole, an accommodating cavity for the second head to be embedded in is formed in the shell, and the accommodating cavity corresponds to the first wiring hole.

In some embodiments, the signal transmission assembly further comprises a pressure plate installed on the housing, the pressure plate comprises at least one clamping hole, the first head is passed through the at least one clamping hole, and clamped between the pressure plate and the housing.

In some embodiments, the first head comprises a pair of positioning protrusions, the pair of positioning protrusions are respectively formed on two opposite sides of an end surface of the first head and are used to be embedded into an annular groove on an outer surface of the housing of the host.

In some embodiments, the shell comprises an upper shell and a lower shell that cooperates with the upper shell, first wiring grooves and first accommodating grooves are formed on one side of the lower shell, second wiring grooves and second accommodating grooves are formed on a corresponding side of the upper shell; the first wiring grooves and the second wiring grooves are combined together with their openings facing each other to form the first wiring hole, the first accommodating grooves and the second accommodating grooves are combined together with their openings facing each other to form the accommodating cavity; bottoms of the first accommodating grooves and/or bottoms of the second accommodating grooves are respectively provided with location columns; an upper side or lower side of the second head is provided with location holes, and the location holes correspond to the location columns.

In some embodiments, the lower shell comprises a lower shell body and the multiple support assemblies formed on a surface of the lower shell body opposite to the upper shell.

In some embodiments, the upper shell comprises an upper shell body, multiple support columns formed on a surface of the upper shell body opposite to the lower shell body, and an annular groove formed on an end surface of the peripheral sidewall of the upper shell body, the support columns abut against a bottom wall of the lower shell body to increase the compressive capacity of the shell, and the annular groove is used for embedding a seal.

In some embodiments, the annular groove is configured to be entirely positioned on an inner side of all locking holes on an end surface of a surrounding wall of the upper shell body.

In some embodiments, the lower shell further comprises one or both of a buffer strip and a magnetic attraction element, the magnetic attraction element is configured to be magnetically attracted and combined with a magnetic attraction element of the host when the antenna module is in a stowed state relative to the host, the buffer strip is provided on a back of the lower shell, and is configured to be more stable when attached to the host.

In some embodiments, the shell comprises at least two air guidance assemblies, the at least two air guidance assemblies are provided at an upper part and a lower part of the shell respectively, and respectively connect an inner cavity of the shell with ambient air.

In some embodiments, the at least two air guidance assemblies are respectively provided on two opposite side walls of the shell; at least one air guidance assembly comprises an air guidance inner cover and an air guidance outer cover combined face-to-face onto the air guidance inner cover, and an air guidance cavity is formed between the air guidance inner cover and the air guidance outer cover.

In some embodiments, the air guidance outer cover comprises a first surface opposite to the air guidance inner cover, the air guidance inner cover comprises a second surface opposite to the air guidance outer cover, multiple first air guidance tubes extending towards the first surface are formed on the second surface; multiple second air guidance tubes extending towards the second surface are formed on the first surface, the multiple second air guidance tubes are arranged in a staggered manner with the multiple first air guidance tubes, and a distance from the first surface to the second surface is less than the sum of lengths of the first air guidance tube and the second air guidance tube.

In some embodiments, multiple protrusions protruding towards the second surface are formed on the first surface, the multiple protrusions are respectively provided opposite to and spaced from the multiple first air guidance tubes; and the air guidance outer cover is provided with drainage ports at least on a top side edge and a bottom side edge.

In some embodiments, the portable frequency jammer comprises a rotational connecting assembly, the antenna module is connected to the host through the rotational connecting assembly, and the rotational connecting assembly comprises at least two angle retaining positions.

In some embodiments, the rotational connecting assembly comprises a connecting base, a rotation shaft rotatably passed through the connecting base and a retaining mechanism, the retaining mechanism is connected between the connecting base and rotation shaft, and configured to provide an elastic retaining force for keeping the rotation shaft at the at least two angle retaining positions relative to the connecting base.

In some embodiments, the retaining mechanism comprises a fixed disk, a movable disk and an elastic member, the fixed disk is fixed on the connecting base, the rotation shaft is rotatably passed through the fixed disk; the movable disk is sleeved on the rotation shaft and moves back and forth along an axial direction of the rotation shaft, and abuts against the fixed disk, the movable disk is fixed in a circumferential direction relative to the rotation shaft; the elastic member abuts against the movable disk, and is configured to provide an elastic retaining force for the movable disk to keep it in a tightly-abutted state with the fixed disk; the fixed disk comprises a first surface that abuts against the movable disk, the movable disk comprises a second surface that abuts against the first surface, at least one convex tooth deviated from a center is formed on one of the first surface and the second surface, at least two clamping grooves deviated from a center are formed on the other of the first surface and the second surface, and the at least two clamping grooves are for the at least one convex tooth to be selectively embedded.

In some embodiments, two opposite sides of the at least one convex tooth are processed into a streamlined shape; two opposite sides of each clamping groove are both processed into a streamlined shape; the at least one convex tooth is sector-shaped, and concentric with one of the first surface and the second surface; each clamping groove is sector-shaped, and concentric with the other of the first surface and the second surface.

In some embodiments, the at least one convex tooth comprises two convex teeth, the two convex teeth are distributed on one of the first surface and the second surface in a circular array; the at least two clamping grooves comprise four clamping grooves, the four clamping grooves are distributed on the other of the first surface and the second surface in a circular array.

In some embodiments, the elastic member comprises at least one disc spring sleeved on the rotation shaft, the at least one disc spring tightly abuts against a side of the movable disk away from the fixed disk; the retaining mechanism further comprises a locking fastener sleeved on the rotation shaft, and the locking fastener tightly abuts against a side of the at least one disc spring away from the fixed disk.

In some embodiments, the at least two angle retaining positions respectively comprise a 0-degree retaining position, a 90-degree retaining position, and a 180-degree retaining position, and at the 90-degree retaining position, the antenna module is perpendicular to the host.

In some embodiments, the portable frequency jammer comprises an anti-tipping mechanism to provide auxiliary support for the host.

In some embodiments, the housing comprises a wheel, the wheel and anti-tipping mechanism are installed on a bottom surface of the housing, and respectively positioned at two opposite ends of the bottom surface of the housing, the anti-tipping mechanism comprises blocking bars,the blocking bars are rotatably connected to an end of the bottom surface of the housing that is opposite to the wheel around a longitudinal axis, the blocking bars are completely folded to a bottom surface of the host when not in use, and rotated to protrude from a side surface of the host where the antenna module is positioned when in use, so as to increase the stability of the portable frequency jammer during operation.

In some embodiments, the host comprises a power supply assembly, the power supply assembly is provided in the housing, positioned below the functional module assembly, and detachably electrically connected to the functional module assembly so as to supply power for the functional module assembly.

In some embodiments, the housing comprises a housing body, an upper cover and a lower cover; the housing body comprises an upper opening end and a lower opening end opposite to the upper opening end; the upper cover is connected to the upper opening end in an openable and closable manner; and the lower cover is connected to the lower opening end in an openable and closable manner.

In some embodiments, the functional module assembly is provided in an upper space of the housing body, and its wiring surface faces the upper opening end to facilitate wiring with the antenna module; and the power supply assembly is provided in a lower space of the housing body.

In some embodiments, when assembling the host: the functional module assembly is inserted downward from the upper opening end into the upper space of the housing body; the power supply assembly is inserted upward from the lower opening end into the lower space of the housing body.

In some embodiments, the functional module assembly comprises at least one first connector facing downwards; the power supply assembly comprises at least one second connector facing upwards, and the at least one second connector is detachably plugged with the at least one first connector to electrically connect the power supply assembly to the functional module assembly.

In some embodiments, an alignment mechanism is provided between the functional module assembly and the power supply assembly, to make the first connector and the second connector be aligned when plugging.

In some embodiments, the functional module assembly comprises an insertion frame and multiple functional modules detachably plugged in the insertion frame; the insertion frame comprises a functional module management board provided at a bottom of the insertion frame, the at least one first connector is provided on the functional module management board; the power supply assembly comprises a power management board, and the at least one second connector is provided on the power management board.

In some embodiments, a surface of the functional module management board facing the multiple functional modules is provided with multiple electrical sockets for the multiple functional modules to be electrically inserted therein respectively, the functional module management board is configured for providing any one or more functions of an interaction and distribution of signals among various functional modules, power supply and clock signals; and the power management board is configured to manage charging and distribution of power.

In some embodiments, the multiple functional modules comprise multiple interference signal generation modules, a signal receiving module and a main control board, the multiple interference signal generation modules are used to generate interference signals in different frequency bands, the signal receiving module is used to receive signals from base stations, the multiple interference signal generation modules, the signal receiving module and the main control board are inserted into the insertion frame in a plug-in manner.

In some embodiments, the host further comprises an air guidance assembly, an exhaust port is provided on a side wall of the housing body facing the antenna module near the functional module assembly, so that the air guidance assembly is installed in it.

In some embodiments, the functional module assembly further comprises a first fan assembly, the first fan assembly is arranged on a side of the insertion frame close to the exhaust port, and an air intake side is directly opposite airflow channels of multiple functional modules, an air exhaust side is directly opposite the exhaust port, to drive cooling air to flow through the airflow channels between the functional modules, cool the functional modules, and then be discharged out of the housing through the exhaust port.

In some embodiments, the functional module assembly further comprises a wire organizer, the wire organizer shields a gap between a top of the insertion frame and a side wall of the housing, so that more cooling air passes through the functional modules.

In some embodiments, the housing body comprises a second wiring hole; the wire organizer comprises a substrate and a wire clamp provided on a top surface of the substrate; a long side of the substrate is connected to a side of a top of the insertion frame close to the second wiring hole, and is adjacent to the second wiring hole, the wire clamp corresponds to the second wiring hole, the wire clamp is used to clamp signal wires, the signal wires are passed through the second wiring hole, and the signal wires are used to communicatively connect the multiple functional modules with multiple first antennas.

In some embodiments, the host further comprises a reinforcing member, the reinforcing member is provided on an inner surface of a side wall of the housing or in an interlayer of the side wall, and comprises a first reinforcing part distributed around the exhaust port and a second reinforcing part distributed around the second wiring hole, wherein the first reinforcing part and the second reinforcing part are used to strengthen the strength around the exhaust port of the housing.

In some embodiments, the reinforcing member further comprises a shielding part that shields a gap between the power supply assembly and a side wall of the housing where the second wiring hole is positioned, the shielding part is used to increase the strength of the reinforcing member, and also to shield a gap between the functional module assembly and an inner wall of the housing, allowing heat dissipation airflow to flow through the functional module assembly in a more concentrated manner so as to improve the heat dissipation efficiency.

In some embodiments, the host further comprises first brackets and second brackets, the first brackets are provided near top ends on inner wall surfaces of side walls of the housing to support the functional module assembly; the second brackets are provided near bottom ends on inner wall surfaces of two opposite side walls of the housing to fix the power supply assembly.

In some embodiments, the power supply assembly further comprises a fixing frame, a power supply, a power adapter and a second fan assembly, the fixing frame is detachably installed in the housing, the power supply is detachably fixed in the fixing frame, the power adapter is detachably fixed on one side of the fixing frame, the second fan assembly is provided on a bottom surface of the fixing frame and is configured to blow cold air towards the power supply and the power adapter for cooling.

In some embodiments, the fixing frame comprises a first side frame, a second side frame, a third side frame, and a fourth side frame which are connected end to end in sequence, these side frames define an accommodating space for accommodating the power supply, the power management board is longitudinally provided between the first side frame and the power supply, a surface of the power management board that faces the power supply is also provided with a power interface, and the power interface is plugged together with the power supply.

In some embodiments, the power supply comprises a bracket assembly, a battery and a cover plate, the bracket assembly defines an accommodating space, the battery is closely accommodated within the accommodating space, the cover plate is combined with an opening end of the bracket assembly to lock the battery in the accommodating space, wherein the bracket assembly is U-shaped, and comprises a first bracket and a second bracket combined with the first bracket, the first bracket is in the shape of J-shaped plate, and the second bracket comprises a plate part.

In some embodiments, the portable frequency jammer is a trolley-case-style frequency jammer.

In some embodiments, when the portable frequency jammer is in operation, some or all of the second antenna is positioned outside the shell.

In some embodiments, when the second antenna is non-detachably connected to the shell, the second antenna is connected to the shell in a hinged manner or telescopically connected to the shell.

The advantages of the present invention: since the antenna module of the portable frequency jammer in the present invention is provided outside the housing and integrally connected to the host, there is no need to repeatedly disassemble and assemble the antenna, thus having the advantages of saving time and labor and having a fast response speed.

### BRIEF DESCRIPTION OF THE DRAWINGS

The following will further illustrate the present invention in combination with the accompanying drawings and embodiments. In the accompanying drawings:
Figure 1 is a schematic diagram of a three-dimensional structure of the portable frequency jammer in some embodiments of the present invention.
Figure 2 is a schematic diagram of a cross-sectional structure along the A-A direction of the portable frequency jammer shown in Figure 1.
Figure 3 is a schematic diagram of a three-dimensional exploded structure of the portable frequency jammer shown in Figure 1.
Figure 4 is a schematic diagram of a three-dimensional structure of the portable frequency jammer shown in Figure 1 in the first use state.
Figure 5 is a schematic diagram of a three-dimensional structure of the portable frequency jammer shown in Figure 1 in the second use state.
Figure 6 is a schematic diagram of a three-dimensional exploded structure of the host of the portable frequency jammer shown in Figure 1.
Figure 7 is a schematic diagram of a three-dimensional exploded structure of the host of the portable frequency jammer shown in Figure 1 from another perspective.
Figure 8 is a schematic diagram of a three-dimensional exploded structure of the host body of the host shown in Figure 6.
Figure 9 is a schematic diagram of a three-dimensional exploded structure of the host body shown in Figure 8 from another perspective.
Figure 10 is a schematic diagram of a three-dimensional exploded structure of the functional module assembly of the host body shown in Figure 8.
Figure 11 is a schematic diagram of a three-dimensional exploded structure of the functional module assembly shown in Figure 10 from another perspective.
Figure 12 is a schematic diagram of a three-dimensional exploded structure of the power supply assembly of the host body shown in Figure 8.
Figure 13 is a schematic diagram of a three-dimensional exploded structure of the power supply of the power supply assembly shown in Figure 12.
Figure 14 is a schematic diagram of a three-dimensional exploded structure of the power supply shown in Figure 13 from another perspective.
Figure 15 is a schematic diagram of a three-dimensional exploded structure of the bracket assembly of the power supply shown in Figure 14.
Figure 16 is a schematic diagram of a cross-sectional structure along the C-C direction of the host body shown in Figure 6.
Figure 17 is a schematic diagram of a cross-sectional structure along the C-C direction of the host body shown in Figure 16 in a disassembled state.
Figure 18 is a schematic diagram of a three-dimensional exploded structure of the housing body of the host body shown in Figure 8.
Figure 19 is a schematic diagram of a three-dimensional structure of the antenna module of the portable frequency jammer shown in Figure 1.
Figure 20 is a schematic diagram of a three-dimensional structure of the antenna module shown in Figure 19 from another perspective.
Figure 21 is a schematic diagram of a cross-sectional structure along the F-F direction of the antenna module shown in Figure 19.
Figure 22 is a schematic diagram of a three-dimensional exploded structure of the antenna module shown in Figure 19.
Figure 23 is a schematic diagram of a three-dimensional exploded structure of the antenna module shown in Figure 22 from another perspective.
Figure 24 is a schematic diagram of a three-dimensional exploded structure of the lower shell of the antenna module shown in Figure 19.
Figure 25 is a schematic diagram of a three-dimensional exploded structure of the lower shell shown in Figure 24 from another perspective.
Figure 26 is a schematic diagram of a cross-sectional structure along the N-N direction of the lower shell shown in Figure 23.
Figure 27 is a schematic diagram of a three-dimensional exploded structure of the upper shell of the antenna module shown in Figure 19.
Figure 28 is a schematic diagram of a three-dimensional exploded structure of the upper shell shown in Figure 27 from another perspective.
Figure 29 is a schematic diagram of a cross-sectional structure along the M-M direction of the upper shell shown in Figure 22.
Figure 30 is a schematic diagram of a three-dimensional structure of the rotational connecting assembly of the portable frequency jammer shown in Figure 1.
Figure 31 is a schematic diagram of a three-dimensional exploded structure of the rotational connecting assembly shown in Figure 30.
Figure 32 is a schematic diagram of a three-dimensional exploded structure of the rotational connecting assembly shown in Figure 31 from another perspective.
Figure 33 is a schematic diagram of a cross-sectional structure along the K-K direction of the rotational connecting assembly shown in Figure 30.
Figure 34 is a schematic diagram of a cross-sectional structure of the rotational connecting assembly shown in Figure 33 in a disassembled state.
Figure 35 is a schematic diagram of a three-dimensional structure of the signal transmission assembly of the portable frequency jammer shown in Figure 1.
Figure 36 is a schematic diagram of a three-dimensional exploded structure of the signal transmission assembly shown in Figure 35.
Figure 37 is a schematic diagram of a three-dimensional structure of the signal transmission assembly shown in Figure 35 from another perspective.
Figure 38 is a schematic diagram of a three-dimensional exploded structure of the signal transmission assembly shown in Figure 35 from another perspective.
Figure 39 is a schematic diagram of a cross-sectional structure along the B-B direction of the portable frequency jammer shown in Figure 1.
Figure 40 is a schematic diagram of a partially enlarged structure of the part E of the portable frequency jammer shown in Figure 39.
Figure 41 is a schematic diagram of a three-dimensional structure of the portable frequency jammer in some other embodiments of the present invention.
Figure 42 is a schematic diagram of a cross-sectional structure along the B'-B' direction of the portable frequency jammer shown in Figure 41.
Figure 43 is a schematic diagram of a partially enlarged structure of the part E' of the portable frequency jammer shown in Figure 42.
Figure 44 is a schematic diagram of a structure of the portable frequency jammer in some other embodiments of the present invention in a stowed state.
Figure 45 is a schematic diagram of a structure of the portable frequency jammer shown in Figure 44 in a working state.

### DETAILED DESCRIPTION

The portable frequency jammers in the related arts are usually equipped with more than ten antennas. And the antennas are usually screwed onto the host through threads. It takes several turns to screw each antenna onto the host. The inventor has creatively found that such portable frequency jammers have numerous technical problems and can no longer meet the work requirements such as high efficiency and timely response nowadays. For example, it is very time-consuming and laborious to screw on more than ten antennas, and it is also easy to connect the antennas wrongly. Additionally, in situations where a quick response is required, such as interfering with drones, the response speed of these equipment will be very slow and it can't meet the requirements of the work.

Through a large number of analyses, researches, experiments, verifications and continuous developments, the inventor of the present invention has broken through the traditional technical architecture of the existing portable frequency jammers. Creatively, the inventor has proposed integrating the antennas of the portable frequency jammer into a module and integrally connecting them to the host. For example, but not limited to, through a movable connection. Therefore, there is no need to repeatedly disassemble and assemble the antennas, saving time and labor, increasing response speed and bringing many other benefits.

In order to have a clearer understanding of the technical features, purposes and effects of the present invention, the specific implementation manners of the present invention will now be described in detail with reference to the accompanying drawings.

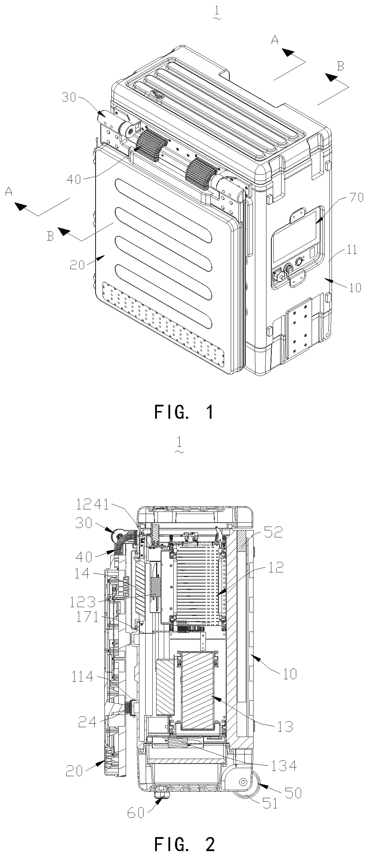

Figures 1 to 5 illustrate the portable frequency jammer 1 in some embodiments of the present invention. The portable frequency jammer 1 can be used to inhibit the normal operation of wireless communication devices. For example, it can block the signals of mobile phones, pagers or other wireless communication devices. The specific applications of the portable frequency jammer 1 include interfering with wireless remote-controlled explosives so that they cannot be detonated. Thus, the portable frequency jammer 1 is particularly applicable to the confidentiality work of important conference venues, the security protection of the activity sites of important persons, and the transfer or disposal of suspicious explosive items by explosive ordnance disposal personnel.

As shown in the figures, in some embodiments, the portable frequency jammer 1 can include a host 10, an antenna module 20, a rotational connecting assembly 30 and a signal transmission assembly 40. In some embodiments, the host 10 may have the functions of generating multi-band interference signals, realizing human-computer interaction, data processing and power supply, etc. In some embodiments, the antenna module 20 can be used to respectively transmit the multi-band interference signals generated by the host 10 and can also be used to receive signals from base stations. In some embodiments, there may be two rotational connecting assemblies 30, which respectively hinge one side of the antenna module 20 to the host 10. The antenna module 20 is connected to the host 10 in a flippable manner, enabling the antenna module 20 to transition between a folded state (stowed state) and an unfolded state (working state) relative to the host 10. It should be understood that the number of rotational connecting assemblies 30 is not limited to two, and one or more than two can be applicable. The signal transmission assembly 40 communicatively connects the antenna module 20 with the host 10 and is configured to realize the signal transmission between the host 10 and the antenna module 20.

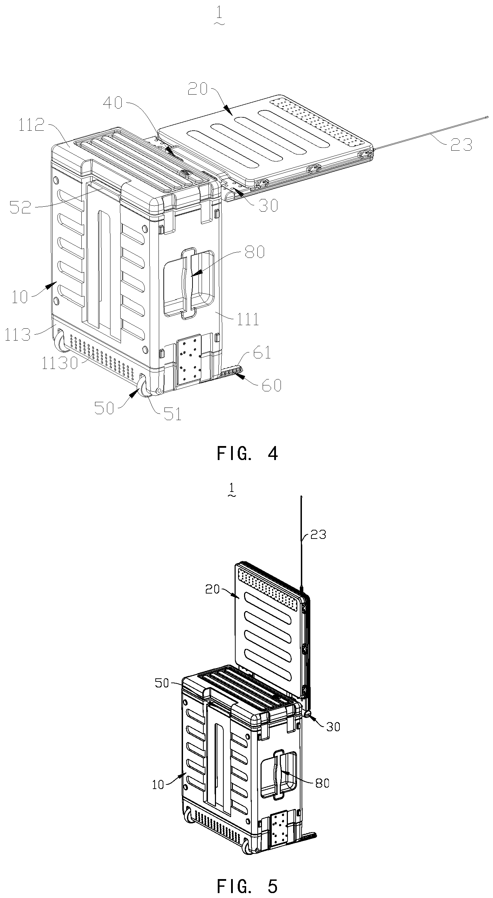

The portable frequency jammer 1 specifically has the antenna module 20 configured as an integrated whole and integrally connected with the host 10 (that is, there is no need to disassemble the antenna module 20 when stowed), which makes it very convenient to carry. In addition, the antenna module 20 is designed as a pivoting flip structure. When in use, it can be flipped 180 degrees (as shown in Figure 5) or 90 degrees (as shown in Figure 4) without the need to repeatedly disassemble and assemble the antenna, making it very convenient for both use and storage. Moreover, the portable frequency jammer 1 hides each antenna in appearance, and its overall shape is more harmonious and aesthetically pleasing.

It should be understood that, the portable frequency jammer 1 is not limited to having only one antenna module 20. In some embodiments, it can also include two or more antenna modules 20. The number of antennas in each antenna module 20 is correspondingly reduced. Each antenna module 20 can be connected to the host 10 through its own rotational connecting assembly 30.

As shown in Figure 2, in some embodiments, the portable frequency jammer 1 can be a trolley-case-style frequency jammer. It can also include a moving mechanism 50. In some embodiments, the moving mechanism 50 can include a wheel 51 installed on one side of the bottom of the host 10 and a retractable pull rod 52 installed on the side wall of the host 10 which is on the same side as the wheel 51. So that when it is necessary to move the portable frequency jammer 1, the user can pull up the pull rod 52 and drag it on the ground. Understandably, the portable frequency jammer 1 is not limited to being a trolley-case-style frequency jammer. In some embodiments, it can also be a backpack-style frequency jammer, a suitcase-style frequency jammer, etc. Specifically, it can be achieved by adding or reducing the corresponding portable configurations.

As shown in Figure 1, Figure 3 and Figure 4, in some embodiments, the portable frequency jammer 1 can also include an anti-tipping mechanism 60, a control panel 70 and a handle 80. The anti-tipping mechanism 60 is installed at the bottom of the host 10 to operatively provide auxiliary support for the host 10. The control panel 70 is provided on one side of the host 10 and is electrically connected to the electronic components of the host 10, so that users can control the operation of the portable frequency jammer 1. The handle 80 can be provided on one side of the host 10 opposite to the control panel 70 to facilitate users to carry the portable frequency jammer 1 by hand. However, alternatively, in some alternative embodiments, any one or several of the anti-tipping mechanism 60, the control panel 70 and the handle 80 may not be installed on the outside of the host 10.

In some embodiments, the anti-tipping mechanism 60 can include blocking bars 61. The number of the blocking bars 61 can be two, and the blocking bars 61 are spaced apart and arranged on the bottom surface of the host 10. Each blocking bar 61 is rotatably connected to an end of the bottom surface of the host 10 that is opposite to the wheel 51 around a longitudinal axis. When not in use, it can be completely folded to the bottom surface of the host 10 (the first position). When in use, it is rotated to protrude from the side surface of the host 10 where the antenna module 20 is positioned(as shown in Figure 4) (the second position), so as to increase the stability of the portable frequency jammer 1 during operation. It can be understood that the number of the blocking bars 61 is not limited to two; one or more than two may also be applicable.

In some embodiments, the anti-tipping mechanism 60 can not be limited to the structure mentioned above, and it can also be other suitable structures. Additionally, the position where it is installed on the host 10 is not limited to the bottom surface of the host 10 either. For example, it can also be installed on the side surface of the host 10, etc. As long as the stability of the portable frequency jammer 1 with the antenna module 20 is enhanced, it should fall within the protection scope of this application.

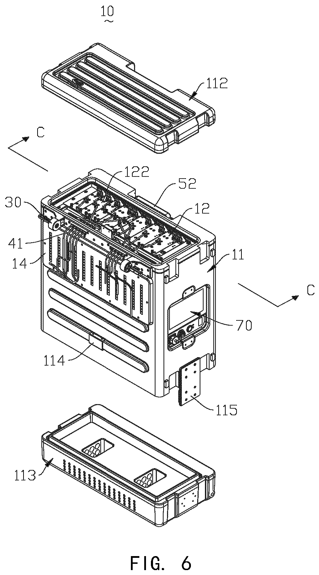

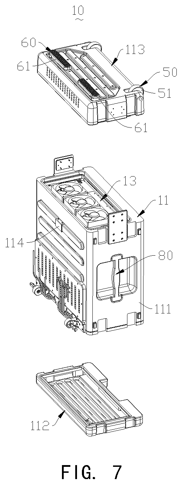

Referring to FIGS. 6 to 9 together, in some embodiments, the host 10 can include a housing 11, a functional module assembly 12 and a power supply assembly 13. Optionally, in some embodiments, the housing 11 can be approximately in the shape of a cuboid and can be made of engineering plastic materials with high strength and low electromagnetic wave loss. The functional module assembly 12 is provided in the housing 11 and is connected to the antenna module 20 through the signal transmission assembly 40, which is configured to generate multi-band interference signals. The power supply assembly 13 is provided in the housing 11, positioned below the functional module assembly 12, and is detachably electrically connected to the functional module assembly 12 so as to supply power for the functional module assembly 12. It can be understood that the housing 11 is not limited to being in the shape of a cuboid. In some embodiments, it can also be in other suitable shapes such as the shape of a cube, cylinder, etc. It can also be understood that there is no particular limitation on the materials of the housing 11.

Referring to FIGS. 6 to 9 together, in some embodiments, the housing 11 can include a housing body 111, an upper cover 112 and a lower cover 113. In some embodiments, the housing body 111 can include an upper space and a lower space, which are respectively configured to accommodate and fix the functional module assembly 12 and the power supply assembly 13. The upper cover 112 is detachably installed on the upper end of the housing body 111 and can be locked by a quick-release locking part (not shown) so as to facilitate the plug-in installation, wiring and maintenance of the functional module assembly 12 positioned in the upper space. The lower cover 113 is detachably installed on the lower end of the housing body 111 and can be locked by a quick-release locking part (not shown) so as to facilitate the plug-in installation, wiring and maintenance of the power supply assembly 13 positioned in the lower space. With such configurations, the size of the entire housing 11 can be miniaturized, thereby facilitating the miniaturization and portability of the entire portable frequency jammer 1.

In some embodiments, the housing body 111 can be a hollow cubic shape, which includes an upper opening end 1110 and a lower opening end 1112 opposite to the upper opening end 1110. In some embodiments, the functional module assembly 12 can be inserted downward from the upper opening end 1110 into the upper space of the housing body 111, and its wiring surface faces the upper opening end 1110 to facilitate wiring. Moreover, the cross-sectional dimensions of the functional module assembly 12 are adapted to those of the upper space so as to reduce the size of the entire device and facilitate carrying. In some embodiments, the power supply assembly 13 can be inserted upward from the lower opening end 1112 into the lower space of the housing body 111 and be electrically connected to the functional module assembly 12. The housing body 111, the functional module assembly 12 and the power supply assembly 13 are combined together to form a host body, which constitutes the core part of the host 10. In some embodiments, the openings of the upper opening end 1110 and the lower opening end 1112 can both be rectangular, and their sizes are respectively adapted to the maximum cross-sectional dimensions of the functional module assembly 12 and the power supply assembly 13, enabling the size of the housing body 111 to be miniaturized as much as possible. In some embodiments, the connections between the functional module assembly 12 and the housing body 111, between the power supply assembly 13 and the housing body 111, as well as between the functional module assembly 12 and the power supply assembly 13, are all detachable, so that when the functional module assembly 12 and/or the power supply assembly 13 fail, they can be detached for maintenance or replacement.

In some embodiments, the upper cover 112 is detachably installed on the upper opening end 1110 to operatively cover the upper opening end 1110. In some embodiments, the lower cover 113 is detachably installed on the lower opening end 1112 to operatively cover the lower opening end 1112 and provide support for the housing body 111. The upper cover 112 and the lower cover 113 are respectively detachably installed on the upper opening end 1110 and the lower opening end 1112 of the housing body 111, which can facilitate the installation, wiring and maintenance of the functional module assembly 12 and the power supply assembly 13. It can be understood that the upper cover 112 and the lower cover 113 are not limited to being detachably installed on the housing body 111. In some embodiments, one side edge of the upper cover 112 and one side edge of the lower cover 113 are both hinged to the housing body 111, allowing the upper opening end 1110 and the lower opening end 1112 to be operably opened and closed.

In some embodiments, one end of the housing body 111 can have an opening and another end can be closed. For example, but not limited to, it can have an upper opening end while the lower end is closed.

In some embodiments, the housing 11 can include a stiffener 115. The stiffener 115 connects the lower cover 113 to the housing body 111 to prevent the lower cover 113 from deforming or being damaged when it bears a relatively large weight. The stiffener 115 can be detachably connected to the lower cover 113 and the housing body 111 by screw fasteners, respectively. In some embodiments, the number of the stiffener 115 can be two, and they are respectively arranged on two opposite sides of the lower cover 113. It can be understood that the number of the stiffener 115 is not limited to two. One or more than two are also acceptable.

In some embodiments, the wheel 51 and the anti-tipping mechanism 60 can be installed on the lower cover 113 and are respectively positioned on two opposite ends of the bottom surface of the lower cover 113. Multiple air intake holes 1130 can also be formed on the lower cover 113 (see Figure 4), so that the cooling air can enter the housing 11 through the lower cover 113.

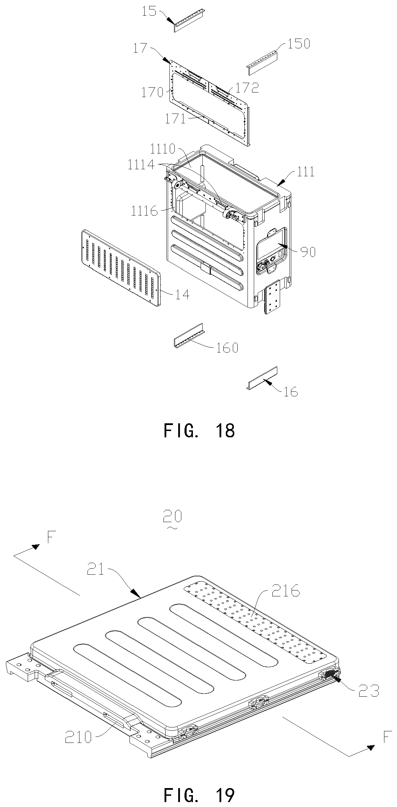

In some embodiments, the side wall of the housing body 111 facing the antenna module 20 near the upper opening end 1110 can have wiring holes 1114 (see Figure 18), which are configured to pass through for the signal wires 41 of the signal transmission assembly 40. In some embodiments, the number of the wiring holes 1114 can be two, allowing the signal wires 41 of the signal transmission assembly 40 to be divided into two groups and pass through them respectively. It can be understood that the number of the wiring holes 1114 is not limited to two. One or more than two can also be applicable. In some embodiments, the side wall of the housing body 111 facing the antenna module 20 near the functional module assembly 12 can have an exhaust port 1116(see Figure 18), so that the air guidance assembly 14 can be installed in it.

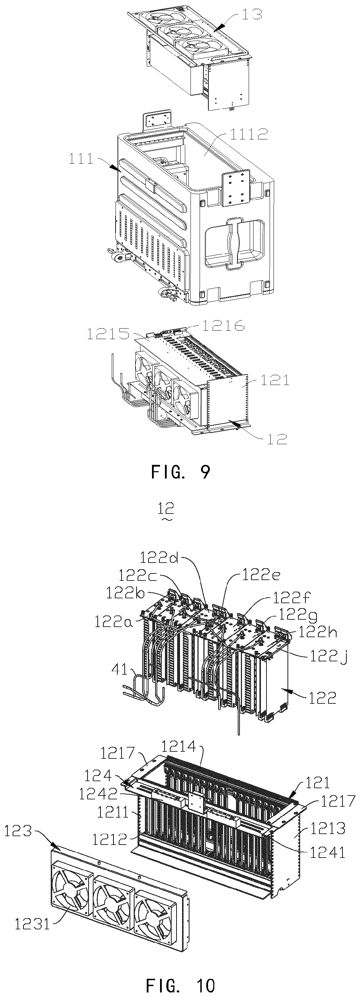

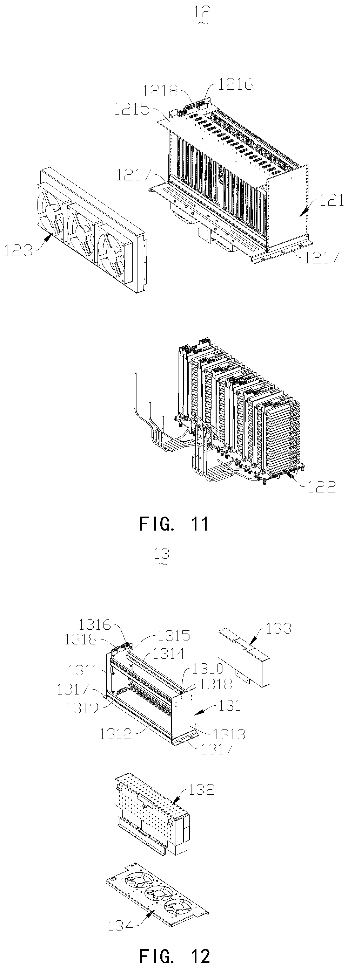

Referring to Figure 10 and Figure 11 together, in some embodiments, the functional module assembly 12 can include an insertion frame 121, multiple functional modules 122, a first fan assembly 123 (i.e., a cooling fan assembly) and a wire organizer 124. In some embodiments, the insertion frame 121 can be in the shape of a square frame and can be used to load multiple functional modules 122, and is detachably electrically connected to multiple functional modules 122. Multiple functional modules 122 can be used to generate interference signals within different frequency bands. The first fan assembly 123 is installed on the side of the insertion frame 121 that faces the exhaust port 1116 and is used to drive the airflow to dissipate the heat generated by multiple functional modules 122 through the exhaust port 1116. The wire organizer 124 is installed on the side of the insertion frame 121 that faces the wiring holes 1114 to organize multiple signal wires 41 of the signal transmission assembly 40, facilitating the wiring operation and improving the neatness. The wire organizer 124 can also be used to prevent the signal wires 41 from exerting a large pulling force on the functional module assembly 12 as the signal wires 41 move along with the antenna module 20 when the antenna module 20 is flipped, which could damage the functional module assembly 12. In some embodiments, each frequency band's functional module 122 can include a power amplifier and a signal source. The input end of each frequency band's power amplifier is connected to the output end of the corresponding frequency band's signal source, and the output end of each power amplifier is connected to the corresponding frequency band's antenna of the antenna module 20.

In some embodiments, multiple functional modules 122 can include eight functional modules 122a, 122b, 122c, 122d, 122e, 122f, 122g and 122h. Among them, seven functional modules 122a, 122b, 122c, 122d, 122f, 122g and 122h can be interference signal generation modules, and the functional module 122e can be a signal receiving module. In some embodiments, multiple functional modules 122 can also include a functional module 122j. The functional module 122j can be the main control board of the host 10, and it can also be inserted into the insertion frame 121 in a plug-in manner. The main control board can include externally connected interfaces such as network ports, USB interfaces, serial ports, RGB/LVDS interfaces, etc., and it is mainly responsible for issuing system instructions, collecting data, interactive communication among business modules, and displaying external interfaces, etc.

Since the functional module assembly 12 of the present invention includes multiple discrete functional modules 122, it has benefits such as easy replacement or selection, stronger compatibility, and greater functional extensibility. Additionally, being designed to insert into the insertion frame 121, the assembly and disassembly are more convenient.

In some embodiments, the wire organizer 124 can also be omitted. Some or all of multiple functional modules 122 can also be integrated into an integrated module. Thus, all these modified designs are all within the protection scope of the present invention.

As shown in Figure 10 and Figure 11, in some embodiments, the insertion frame 121 can include a first side frame 1211, a second side frame 1212, a third side frame 1213, and a fourth side frame 1214 which are connected end to end in sequence. These side frames define multiple insertion positions arranged in parallel and at intervals for multiple functional modules 122 to be inserted respectively. In some embodiments, the insertion frame 121 can also include a functional module management board 1215 provided at the bottom of the frame. The surface of the functional module management board 1215 that faces multiple functional modules 122 is provided with multiple electrical sockets (not shown) for multiple functional modules 122 to be electrically inserted therein respectively. It can be used for the interaction and distribution of signals among the various functional modules 122 as well as for providing functions such as power supply and clock signals.

In some embodiments, the functional module management board 1215 can also include a connector 1216. The connector 1216 is provided on the surface of the functional module management board 1215 that faces the power supply assembly 13 so as to be connected to the power supply assembly 13 in a plug-in manner, thereby achieving rapid electrical conduction with the power supply assembly 13 and further electrically connecting the power supply assembly 13 with multiple functional modules 122. The upper ends of the first side frame 1211 and the third side frame 1213 are also respectively folded outward to form fixing lugs 1217. The pair of fixing lugs 1217 are respectively connected in the housing 11 by means of lap joint to achieve the fixation of the functional module assembly 12 within the housing 11. The inner sides of the lower ends of the first side frame 1211 and the third side frame 1213 are also respectively provided with a guide pillar 1218, which is used to cooperate with the guide bar 1318 of the power supply assembly 13 (see Figure 12) to achieve the guiding function and enable the connector 1216 to connect better with the power supply assembly 13 in a plug-in manner.

In some embodiments, multiple functional modules 122 can include seven interference signal generation modules for different frequency bands and one signal receiving module. The frequency bands of the interference signals generated by the seven interference signal generation modules can be 20 - 200M, 400 - 470M, 750 - 960M, 1.5 - 2.2G, 2.2 - 2.7G, 3.4 - 3.6G and 4.8 - 5.85G respectively. These functional modules 122 are arranged in parallel and spaced apart within the insertion frame 121, and airflow channels are formed between adjacent functional modules 122 to allow cooling air to pass through. Understandably, the number of the functional modules 122 is not limited to seven interference signal generation modules and one signal receiving module. According to requirements, the numbers can be increased or decreased accordingly.

In some embodiments, the first fan assembly 123 can include multiple cooling fans 1231. These cooling fans 1231 are arranged side by side horizontally on the side of the insertion frame 121 close to the exhaust port 1116, the air intake side is directly opposite the airflow channels of multiple functional modules 122, and the air exhaust side is directly opposite the exhaust port 1116, to drive the cooling air to flow through the airflow channels between the functional modules 122, cool the functional modules 122, and then be discharged out of the housing 11 through the exhaust port 1116.

In some embodiments, the wire organizer 124 can include a substrate 1241 and wire clamps 1242 provided on the top surface of the substrate 1241. In some embodiments, the substrate 1241 can be in the shape of a rectangular plate, its long side can be connected to the side of the top of the insertion frame 121 close to the wiring holes 1114 and be adjacent to the wiring holes 1114. The wire clamps 1242 respectively correspond to the wiring holes 1114 to clamp the signal wires 41 (see Figure 6), and allow the signal wires 41 to pass through the wiring holes 1114 more smoothly, and also prevent the signal wires 41 from pulling the functional modules 122 in the host 10 during the flipping process of the antenna module 20. In some embodiments, the substrate 1241 also shields the gap between the top of the insertion frame 121 and the side wall of the housing 11 (as shown in Figure 2), so that more cooling air can pass through the functional modules 122.

Referring to Figure 12 together, in some embodiments, the power supply assembly 13 can include a fixing frame 131, a power supply 132, a power adapter 133 and a second fan assembly 134. The fixing frame 131 is detachably installed in the housing 11. The power supply 132 is detachably fixed in the fixing frame 131. The power adapter 133 is detachably fixed on one side of the fixing frame 131. The second fan assembly 134 is provided on the bottom surface of the fixing frame 131 and is configured to blow cold air towards the power supply 132 and the power adapter 133 for cooling.

In some embodiments, the fixing frame 131 includes a first side frame 1311, a second side frame 1312, a third side frame 1313, and a fourth side frame 1314 which are connected end to end in sequence. These side frames define an accommodating space for accommodating the power supply 132. In some embodiments, the fixing frame 131 can also include a power management board 1315 which is longitudinally provided between the first side frame 1311 and the power supply 132. The power management board 1315 is configured to manage the charging of the power supply 132, power distribution, etc. The surface of the power management board 1315 that faces the power supply 132 is also provided with a power interface 1319, and the power interface 1319 is plugged together with the power supply 132.

In some embodiments, the power management board 1315 can also include a connector 1316. The connector 1316 is provided at the end of the power management board 1315 that faces the functional module assembly 12, so that it can be plugged with the connector 1216 of the functional module assembly 12, thereby achieving rapid electrical conduction with the functional module assembly 12.

The lower ends of the first side frame 1311 and the third side frame 1313 are also respectively folded outward to form fixing lugs 1317. The pair of fixing lugs 1317 are respectively connected in the housing 11 by means of lap joint to achieve the fixation of the power supply assembly 13 within the housing 11. The inner sides of the upper ends of the first side frame 1311 and the third side frame 1313 are also respectively provided with a guide bar 1318, which is used to cooperate with the guide pillar 1218 of the functional module assembly 12 to achieve the guiding function and enable the connector 1316 to align and plug better with the connector 1216 of the functional module assembly 12. In some embodiments, the guide bar 1318 can be provided with a guide groove 1310 that cooperates with the guide pillar 1218. The guide groove 1310 extends from top to bottom and includes a flared opening end.

As can be seen from the above, the guide bar 1318 and the guide pillar 1218 together form an alignment mechanism for the connector 1316 and the connector 1216, preventing the failure of plugging caused by misalignment of the connector 1316 and the connector 1216 as well as damage to the pins. Understandably, in some embodiments, the positions of the guide bar 1318 and the guide pillar 1218 can also be exchanged with each other to achieve the same alignment effect.

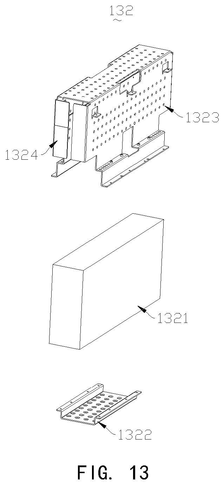

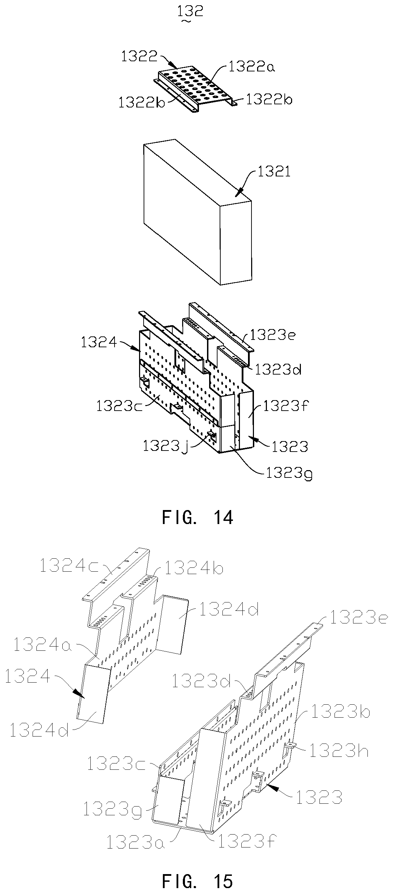

As shown in Figures 13 to 15, the power supply 132 can include a bracket assembly, a battery 1321 and a cover plate 1322 in some embodiments. The bracket assembly defines an accommodating space, and the battery 1321 is closely accommodated within the accommodating space. The cover plate 1322 is combined with the opening end of the bracket assembly to lock the battery 1321 in the accommodating space. The bracket assembly can be U-shaped in some embodiments and can include a first bracket 1323 and a second bracket 1324 combined with the first bracket 1323.

In some embodiments, the first bracket 1323 can be in the shape of J-shaped plate and can be integrally processed and formed from a metal plate. It can include a bottom plate 1323a, a first side plate 1323b and a second side plate 1323c. In some embodiments, the bottom plate 1323a can be rectangular. The first side plate 1323b and the second side plate 1323c are respectively erected on the two opposite long sides of the bottom plate 1323a, and the height of the first side plate 1323b is greater than that of the second side plate 1323c. The bottom plate 1323a, the first side plate 1323b and the second side plate 1323c can all adopt a hollowed-out design in some embodiments. On one hand, this can reduce weight, and on the other hand, it can facilitate the heat dissipation of the battery 1321.

One side of the first side plate 1323b away from the bottom plate 1323a is formed with a step 1323d for one side edge of the cover plate 1322 to be connected thereon by means of lap joint. In some embodiments, the first side plate 1323b also includes an outwardly arranged L-shaped hanging lug 1323e formed on the step 1323d to be connected with the fixing frame 131. The two opposite side edges of the first side plate 1323b also respectively extend towards the second side plate 1323c to form a pair of folded edges 1323f to abut against the two opposite sides of the battery 1321. Correspondingly, the two opposite side edges of the second side plate 1323c also respectively extend towards the first side plate 1323b to form a pair of folded edges 1323g to abut against the above-mentioned two opposite sides of the battery 1321 as well. At the position where the outer side surfaces of the first side plate 1323b and the second side plate 1323c are at a comparable height, two sets of fixing lugs 1323h and 1323j are respectively provided to be connected with the fixing frame 131, so as to improve the stability of the fixation of the power supply 132 in the fixing frame 131.

The second bracket 1324 can be integrally processed and formed from a metal plate in some embodiments. It can include a plate part 1324a. One long side of the plate part 1324a is combined with a side of the second side plate 1323c of the first bracket 1323 away from the bottom plate 1323a by locking fasteners and is parallel to the first side plate 1323b. The combined height of the plate part 1324a and the second side plate 1323c is comparable to the height of the first side plate 1323b. One side of the plate part 1324a away from the second side plate 1323c is formed with a step 1324b for another side edge of the cover plate 1322 to be connected thereon by means of lap joint. In some embodiments, the plate part 1324a also includes an outwardly arranged L-shaped hanging lug 1324c formed on the step 1324b to be connected with the fixing frame 131. The two opposite side edges of the plate part 1324a also respectively extend towards the first side plate 1323b to form a pair of folded edges 1324d to abut against the two opposite sides of the battery 1321. The plate part 1324a can adopt a hollowed-out design in some embodiments. On one hand, this can reduce weight, and on the other hand, it can facilitate the heat dissipation of the battery 1321.

The bracket assembly is formed by splicing the first bracket 1323 and the second bracket 1324. On one hand, this reduces the manufacturing difficulty of the bracket assembly ( difficulties in mold design due to the relatively deep accommodating space). On the other hand, it facilitates the loading of the battery 1321. Because inserting the battery 1321 into a relatively deep and narrow space can easily cause the surface of the battery 1321 to be abraded, leaving safety hazards. Understandably, the bracket assembly is not limited to being formed by splicing the first bracket 1323 and the second bracket 1324. In some embodiments, as long as the conditions permit, it can also be integrally processed and formed from a metal plate.

In some embodiments, the cover plate 1322 can include a rectangular main body part 1322a and a pair of connecting parts 1322b that are integrally and vertically connected to the two opposite long sides of the main body part 1322a. Each connecting part 1322b can be L-shaped and is provided outwardly so as to be respectively connected to the step 1323d and the step 1324b by locking fasteners. In some embodiments, the main body part 1322a can be hollowed out.

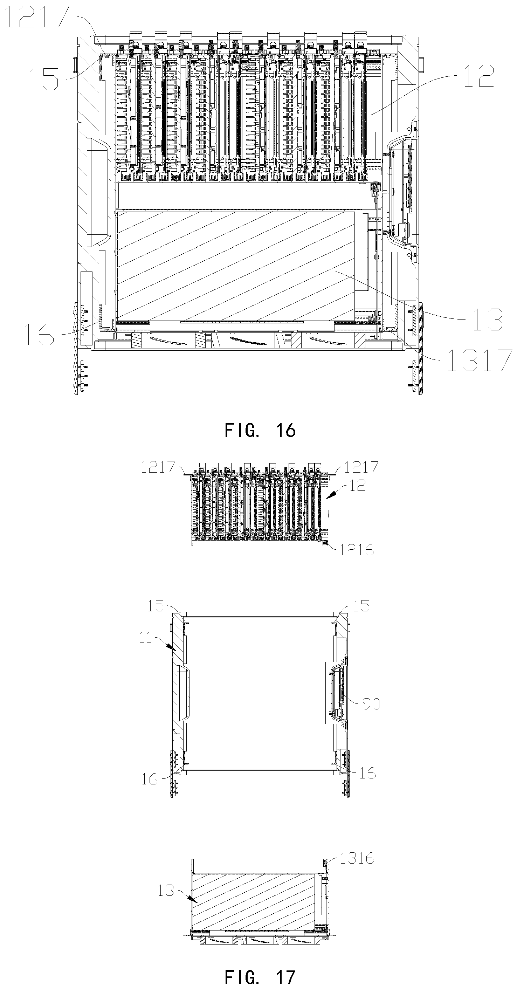

Referring to FIGS. 16 to 18 together, in some embodiments, the host 10 can further include an air guidance assembly 14, first brackets 15, second brackets 16 and a reinforcing member 17. The air guidance assembly 14 is provided in the exhaust port 1116 on the side wall of the housing 11 and is used to guide the hot air inside the housing 11 out of the housing 11 and can achieve the effect of preventing rainwater from leaking into the housing 11. The first brackets 15 are provided near the top ends on the inner wall surfaces of the side walls of the housing 11 to support the functional module assembly 12. In some embodiments, the first brackets 15 can be L-shaped and include multiple first locking holes 150 corresponding to the fixing lugs 1217 of the functional module assembly 12. The second brackets 16 are provided near the bottom ends on the inner wall surfaces of the two opposite side walls of the housing 11 to fix the power supply assembly 13. In some embodiments, the second brackets 16 can be L-shaped and include multiple second locking holes 160 that cooperate with the fixing lugs 1317 of the power supply assembly 13.

In some embodiments, the reinforcing member 17 can be provided on the inner surface of or in the interlayer of the side wall of the housing 11, and includes a first reinforcing part 170 distributed around the exhaust port 1116 and a second reinforcing part 172 distributed around the wiring holes 1114. The first reinforcing part 170 and the second reinforcing part 172 are used to strengthen the strength around the openings of the housing 11.

In some embodiments, the reinforcing member 17 further includes a shielding part 171 that shields the gap between the power supply assembly 13 and the side wall of the housing 11 where the wiring holes 1114 is positioned. On one hand, the shielding part 171 is used to increase the strength of the reinforcing member 17. On the other hand, it can shield the gap between the functional module assembly 12 and the inner wall of the housing 11 (as shown in FIG. 2), allowing the heat dissipation airflow to flow through the functional module assembly 12 in a more concentrated manner so as to improve the heat dissipation efficiency.

In some alternative embodiments, the reinforcing member 17 can also be omitted.

As shown in FIGS. 19 to 21, in some embodiments, the antenna module 20 can be substantially in the shape of a flat plate. It can include a shell 21 with an inner cavity and a multi-band antenna assembly provided on the shell 21. The multi-band antenna assembly is used to be communicatively connected with multiple functional modules 122 in the host 10 respectively. In some embodiments, the multi-band antenna assembly can include multiple first antennas 22 provided in the inner cavity of the shell 21, and multiple first antennas 22 are communicatively connected with multiple functional modules 122 respectively.

In some embodiments, the antenna module 20 can also include a second antenna 23 provided on the outside of the shell 21, which is used to provide gain for one low-frequency first antenna among multiple first antennas 22. In this way, the length of the low-frequency first antenna in the shell 21 can be shortened, which provides convenience for miniaturizing the shell 21 and further provides convenience for miniaturizing the antenna module 20.

In some embodiments, the shell 21 can be in the shape of a rectangular plate. One side edge of the shell 21 is connected to the host 10 through a rotational connecting assembly 30 in a flippable manner. One side (top side) of the shell 21 away from the rotational connecting assembly 30 is provided with an antenna connector 212 in some embodiments, which is used for the detachable connection of the second antenna 23 to it. Multiple first antennas 22 can be connected to the functional module assembly 12 in the host 10 through a signal transmission assembly 40 so as to be communicatively connected with the host 10. The antenna connector 212 is connected to one low-frequency antenna among multiple first antennas 22 (for example, an antenna in the 20 - 200M frequency band) to connect the second antenna 23 to this low-frequency antenna and provide gain for this low-frequency antenna. It can be understood that the number of antenna connector 212 is not limited to one. If necessary, two or more antenna connectors can also be provided, and correspondingly, two or more second antennas 23 can be connected.

In some embodiments, a pair of wiring holes 210 can be provided on the side (bottom side) of the shell 21 close to the rotational connecting assembly 30 for the signal wires 41 of the signal transmission assembly 40 to pass through. In some embodiments, the second antenna 23 can be in a columnar shape and can be detachably carried on one side of the shell 21 when it is in a non-working state.

It can be understood that the second antenna 23 is not limited to being detachably provided on the shell 21. In some embodiments, it can also be integrally connected to the shell 21. For example, but not limited to, it can be hinged or telescopically connected to the shell 21 and always maintain a communicative connection with the corresponding first antenna 22 in the shell 21.

Specifically, the second antenna 23 can be connected to the shell 21 in a hinged manner and can be transitioned between a use state (for example, an upright state) and a folded state relative to the shell 21. In some other embodiments, the second antenna 23 can be telescopically connected to the shell 21, and in one state, it can retract into the shell 21, while in another state, it can be pulled out of the shell 21. Specifically, a through-hole is formed on the side of the shell 21 away from the rotational connecting assembly 30, which is used for the second antenna 23 to retract into the shell 21 in one state; or, on the side of the shell 21 away from the rotational connecting assembly 30, there is a storage part, which is used for the second antenna 23 to retract into the storage part in one state and then retract the storage part into the shell 21. Herein, there is no specific limitation on the way in which the second antenna 23 is telescopically connected to the shell 21.

In some embodiments, the antenna module 20 can further include a magnetic attraction element 24 provided in the shell 21. It is used to be magnetically attracted and combined with the magnetic attraction element 114 of the host 10 when the antenna module 20 is in a folded state relative to the host 10 (as shown in FIG. 2). In this way, when the antenna module 20 is in a stowed state, it can be magnetically attracted and combined with the host 10 to prevent the antenna module 20 from randomly shaking or colliding with the host 10 during transportation, which could cause damage to the equipment. It can be understood that, in some embodiments, both the magnetic attraction element 24 and the magnetic attraction element 114 can be magnets, or one of them can be a magnet and the other can be iron. The magnet can be a permanent magnet or an electromagnet.

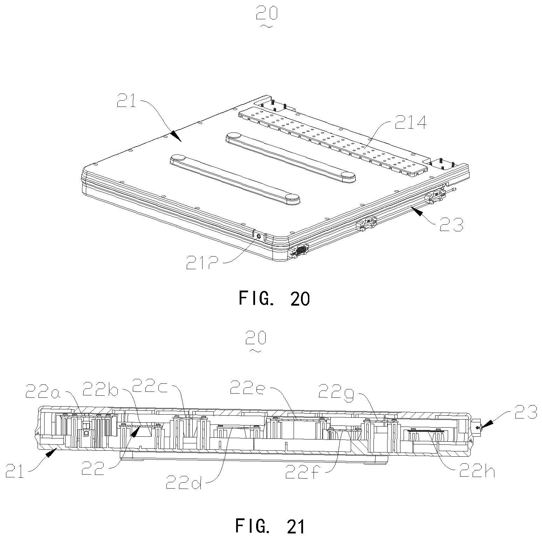

In some embodiments, multiple first antennas 22 can be in the shape of longitudinally elongated sheets and be arranged in parallel and at intervals in the width direction inside the shell 21. As shown in FIG. 21 again, in the thickness direction of the inner cavity of the shell 21, multiple first antennas 22 are arranged in a staggered manner in height in some embodiments (as shown in FIG. 21), to reduce signal interference between adjacent first antennas 22. Specifically, as shown in FIG. 21, these first antennas 22 can include eight first antennas 22a - 22h in some embodiments. Among them, the first antenna 22a, the first antenna 22c, the first antenna 22e, and the first antenna 22g are at relatively higher positions, while the first antenna 22b, the first antenna 22d, the first antenna 22f, and the first antenna 22h are at relatively lower positions. In some embodiments, these first antennas 22 can include seven transmitting antennas and one receiving antenna, which are used to be connected to the functional modules 122 in the host 10 respectively, so that the antenna module 20 has interference capabilities within multiple frequency bands. Specifically, the first antenna 22a, 22b, 22c, 22d, 22f, 22g, and 22h can be transmitting antennas, and the first antenna 22e can be a receiving antenna. The eight first antennas 22a - 22h can be communicatively connected to the eight functional modules 122a, 122b, 122c, 122d, 122e, 122f, 122g, and 122h respectively. The number of transmitting antennas is not limited to seven, and the number of the receiving antenna is not limited to one either.

In some embodiments, multiple first antennas 22 are, for example, microstrip antennas, or also known as printed circuit board patch antennas. However, it can be further understood that multiple first antennas 22 are not limited to being in the shape of longitudinally elongated sheets. In some embodiments, other shapes such as columnar or strip shapes can also be applicable. In some embodiments, the thickness of the inner cavity of the shell 21 is less than or equal to 50 millimeters (mm).

In some embodiments, the number of the first antennas 22 in the antenna module 20 can also be one, and is not limited to being multiple. In the present invention, "multiple" refers to two or more.

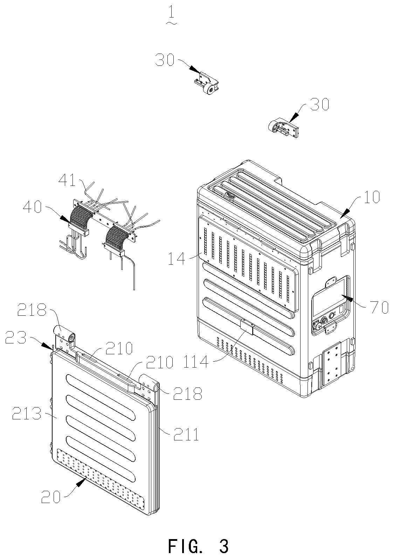

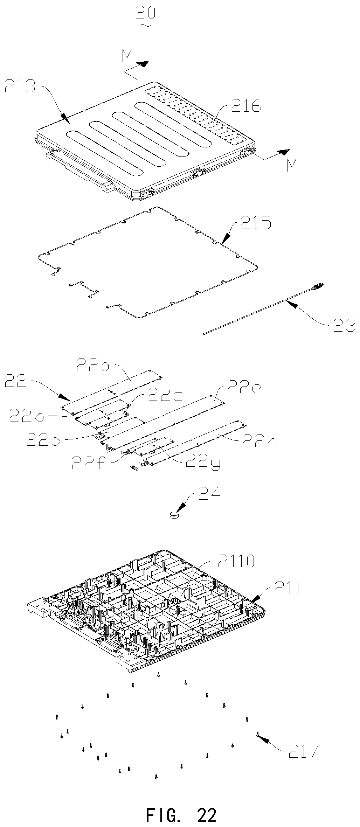

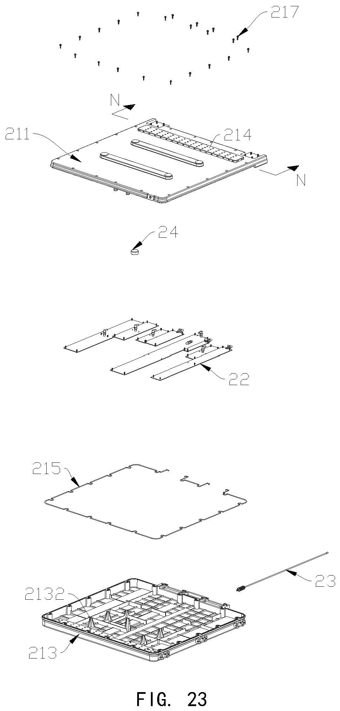

Referring to FIGS. 22 and 23 together, in some embodiments, the shell 21 can include a lower shell 211, an upper shell 213 provided opposite to the lower shell 211, a waterproof seal 215 provided between the lower shell 211 and the upper shell 213, and multiple locking fasteners 217 that lock the lower shell 211 and the upper shell 213 together. The lower shell 211 and the upper shell 213 are buckled together towards each other, defining a cavity for accommodating these first antennas 22. As shown in FIG. 3 again, in some embodiments, the shell 21 can include a pair of bushings 218. The pair of bushings 218 are respectively provided at both ends of the side of the lower shell 211 close to the host 10 and are respectively fixedly sleeved on the rotational shafts 32 of a pair of rotational connecting assemblies 30, so that the shell 21 can be flipped relative to the host 10.

In some embodiments, the shell 21 can also include an air guidance assembly 214 and an air guidance assembly 216. The air guidance assembly 214 and the air guidance assembly 216 respectively connect the inner cavity of the shell 21 with the ambient air to facilitate heat dissipation for these first antennas 22. In some embodiments, the air guidance assembly 214 can be in a longitudinally elongated shape and is provided on the lower shell 211 closed to the rotational connecting assembly 30 (the lower part of the shell 21), and its length direction is parallel to the axis of the rotational shaft of the rotational connecting assembly 30. In some embodiments, the air guidance assembly 216 can be in a longitudinally elongated shape and is provided on the upper shell 213 away from the rotational connecting assembly 30 (the upper part of the shell 21), and its length direction is parallel to the axis of the rotational shaft of the rotational connecting assembly 30. With such an arrangement, there will always be an air guidance assembly on the top and another one on the bottom when the shell 21 is in different states. Cold air can enter the shell 21 from the lower part, absorb the heat generated by the first antennas 22 during working, and then flow out of the shell 21 from the upper part, thus providing good ventilation, heat dissipation and waterproof functions. It can be understood that the air guidance assembly 214 and/or the air guidance assembly 216 are not limited to the longitudinally elongated shape, and other shapes such as square and circular shapes can also be applicable.

It can be understood that the air guidance assembly 214 and the air guidance assembly 216 are not limited to being provided on the lower shell 211 and the upper shell 213 respectively. In some embodiments, both of them can also be provided on the same side. For example, they can both be provided on the lower shell 211 or both on the upper shell 213. In some embodiments, the air guidance assembly 214 and the air guidance assembly 216 can also be integrally embedded into the ventilation holes formed on the shell 21 and be provided in a similar way as the air guidance assembly 14 of the host 10.

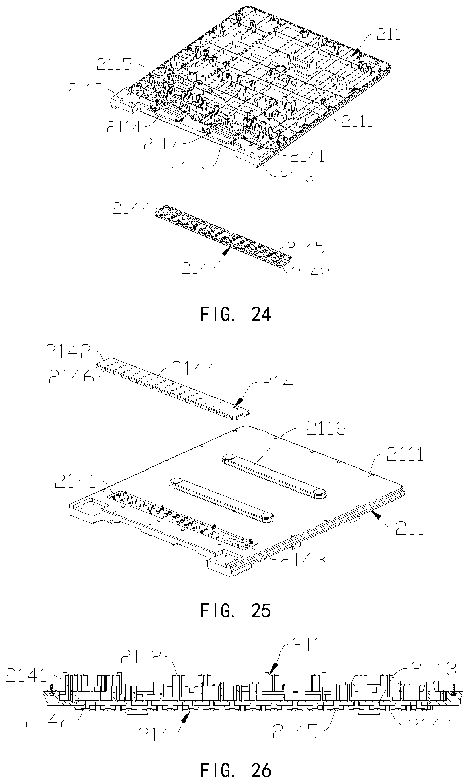

Referring to FIGS. 24 to 26 together, in some embodiments, the lower shell 211 can include a lower shell body 2111, multiple support columns 2112 formed on the surface of the lower shell body 2111 opposite to the upper shell 213, and an installation hole 2110 (see FIG. 22). These support columns 2112 are used to fix the above-mentioned multiple first antennas 22 respectively. The installation hole 2110 is used to fix the magnetic attraction element 24. The lower shell 211 serves as a bearing platform for these first antennas 22, integrating these first antennas 22 into a whole with relatively fixed positions.

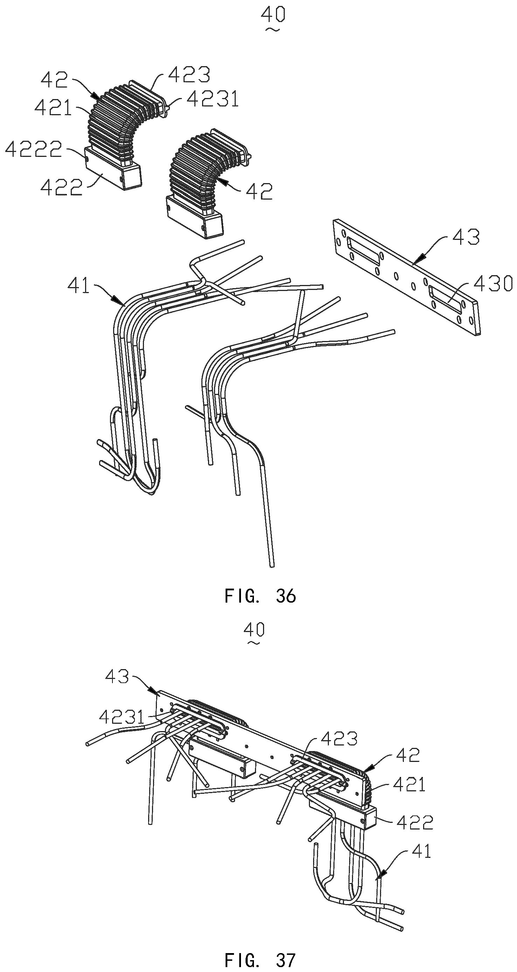

In some embodiments, the lower shell 211 can also include connecting parts 2113, first wiring grooves 2114, wire clamps 2115 and first accommodating grooves 2116. The connecting parts 2113 are respectively provided on the side of the lower shell 211 close to the rotational connecting assembly 30 and are used to connect with the rotational connecting assembly 30. The first wiring grooves 2114 are provided on the side of the lower shell 211 close to the rotational connecting assembly 30, and are used to form the wiring holes 210 (see FIG. 19). The wire clamps 2115 are formed in the lower shell 211 and are respectively adjacent to the first wiring grooves 2114. The wire clamps 2115 are used to clamp multiple signal wires 41 connected to these first antennas 22, prevent damage to the first antennas 22 when the signal wires 41 are pulled, and make the wiring of the signal wires 41 neater. The first accommodating grooves 2116 are provided between the first wiring grooves 2114 and the wire clamps 2115 and are used to fix the lower part of one end of each protective sleeve 42 (see FIG. 36) of the signal transmission assembly 40. The bottoms of the first accommodating grooves 2116 are all provided with first location columns 2117, which are used to cooperate with the location holes at the ends of the protective sleeves 42 to achieve reliable fixation between the protective sleeves 42 and the lower shell 211.

In some embodiments, the lower shell 211 can also include buffer strips 2118. The buffer strips 2118 are provided on the back of the lower shell body 2111 and are used to make the shell 21 more stable when attached to the host 10, preventing damage to the internal electronic components caused by excessive vibration of the shell 21 relative to the host 10 during the moving process. In addition, the arrangement of the magnetic attraction element 24 makes the attachment between the shell 21 and the host 10 more stable.

In some alternative embodiments, either one or both of the magnetic attraction element 24 and the buffer strips 2118 can be omitted.

As shown in FIGS. 24 to 26 again, in some embodiments, the air guidance assembly 214 can include an air guidance inner cover 2141 integrally connected to the lower shell body 2111 and an air guidance outer cover 2142, the openings of the air guidance outer cover 2142 and the air guidance inner cover 2141, which face each other, are combined to form an air guidance cavity between the air guidance inner cover 2141 and the air guidance outer cover 2142.

In some embodiments, multiple air guidance tubes 2143 are formed at intervals on the surface of the air guidance inner cover 2141 that faces the air guidance outer cover 2142. Each air guidance tube 2143 defines a longitudinally elongated air guidance hole, which connects the air guidance cavity of the air guidance assembly 214 with the inner cavity of the shell 21. In some embodiments, the air guidance tubes 2143 can be arranged vertically on the surface of the air guidance inner cover 2141 that faces the air guidance outer cover 2142. It can be understood that the air guidance tubes 2143 are not limited to being arranged vertically. In some embodiments, they can also be arranged in an inclined manner.

In some embodiments, multiple air guidance tubes 2144 are formed at intervals on the surface of the air guidance outer cover 2142 that faces the air guidance inner cover 2141. Each air guidance tube 2144 defines a longitudinally elongated air guidance hole, which connects the air guidance cavity of the air guidance assembly 214 with the ambient air, and these air guidance tubes 2144 are respectively arranged in a staggered manner with multiple air guidance tubes 2143 to improve the waterproof ability of the air guidance assembly 214. In some embodiments, the air guidance tubes 2144 can be arranged vertically on the surface of the air guidance outer cover 2142 that faces the air guidance inner cover 2141. It can be understood that the air guidance tubes 2144 are not limited to being arranged vertically. In some embodiments, they can also be arranged in an inclined manner.

In some embodiments, these air guidance tubes 2143 can be arranged into multiple columns, and each column of air guidance tubes 2143 forms an air guidance unit. In some embodiments, these air guidance tubes 2144 can also be arranged into multiple columns, and each column of air guidance tubes 2144 forms an air guidance unit. These air guidance tubes 2143 and these air guidance tubes 2144 can also be arranged in a staggered manner between the air guidance units. In some embodiments, the sum of the lengths of the air guidance tubes 2143 and the air guidance tubes 2144 is greater than the thickness of the air guidance cavity of the air guidance assembly 214.

In some embodiments, the height of the air guidance tube 2143 in the longitudinal direction is higher than the outer surface of the lower shell body 2111 around the air guidance inner cover 2141. In this way, it is less likely for water droplets to enter the air guidance cavity of the antenna module 20, resulting in better waterproof performance.

In some embodiments, multiple protrusions 2145 are also formed on the surface of the air guidance outer cover 2142 that faces the air guidance inner cover 2141. These protrusions 2145 are respectively provided opposite to these air guidance tubes 2143, and there are intervals between these protrusions 2145 and these air guidance tubes 2143. It can be understood that these protrusions 2145 are not limited to being formed on the air guidance outer cover 2142. In some embodiments, they can also be formed on the air guidance inner cover 2141 and be respectively provided opposite to these air guidance tubes 2144. Furthermore, it can be understood that these protrusions 2145 can also be simultaneously provided on both the air guidance outer cover 2142 and the air guidance inner cover 2141.

In some alternative embodiments, the protrusions 2145 can also be omitted.

In some embodiments, a surrounding wall that is folded towards the air guidance inner cover 2141 is formed on the periphery of the air guidance outer cover 2142. Multiple drainage ports 2146 are provided at intervals in the circumferential direction of the surrounding wall,so as to drain the liquid that enters the air guidance assembly 214, thereby further improving the waterproof performance of the air guidance assembly 214.

In some embodiments, the drainage ports 2146 on the upper and lower sides of the surrounding wall are staggered with the air guidance tubes 2143, so that it can play a role in preventing water droplets from entering the cavity of the antenna module 20 to a certain extent. Wherein the drainage ports 2146 on the upper and lower sides of the surrounding wall refer to the drainage ports on the two opposite surrounding walls provided along the length direction.

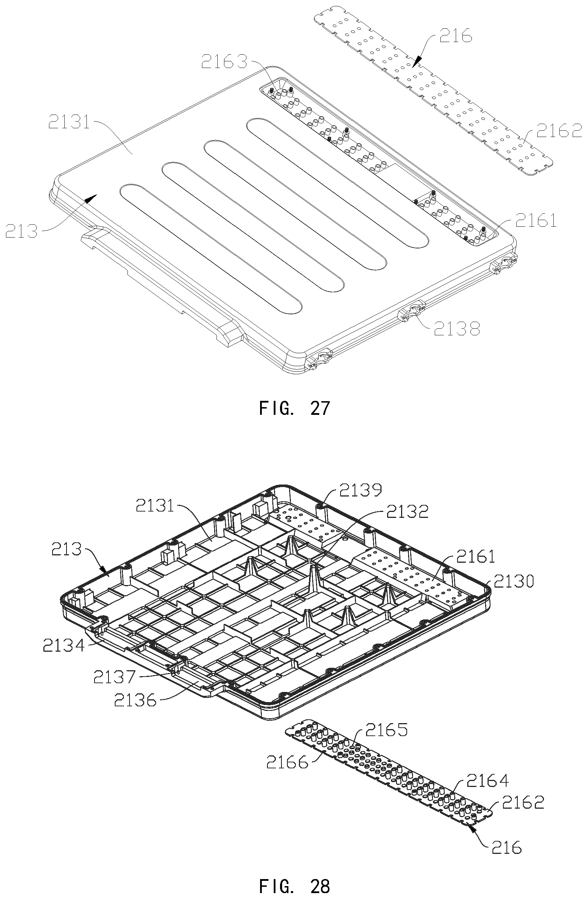

Referring to FIGS. 27 to 29 together, in some embodiments, the upper shell 213 can include an upper shell body 2131, multiple support columns 2132 formed on the surface of the upper shell body 2131 opposite to the lower shell body 2111, and an annular groove 2130 formed on the end surface of the peripheral sidewall of the upper shell body 2131. The support columns 2132 abut against the bottom wall of the lower shell body 2111 to increase the compressive capacity of the shell 21, so that the first antennas 22 inside the shell 21 can be well protected. The annular groove 2130 is used for embedding the seal 215. It is specifically configured to be entirely positioned on the inner side of all the locking holes 2139 on the end surface of the surrounding wall of the upper shell body 2131, preventing liquid from leaking into the shell 21 through the gaps between the locking holes 2139 and the locking fasteners, thereby enhancing the sealing effect.

In some embodiments, the upper shell 213 can also include second wiring grooves 2134, second accommodating grooves 2136 and several clamping members 2138. The second wiring grooves 2134 are respectively provided on the side of the upper shell 213 close to the rotational connecting assembly 30 and are used to cooperate with the first wiring grooves 2114 of the lower shell 211 to form the wiring holes 210. The second accommodating grooves 2136 are adjacent to the second wiring grooves 2134 and are used to fix the upper part of one end of each protective sleeve 42 of the signal transmission assembly 40. Second location columns 2137 are provided in the second accommodating grooves 2136 and are used to cooperate with the location holes at the ends of the protective sleeves 42 to achieve reliable fixation between the protective sleeves 42 and the upper shell 213. These clamping members 2138 are distributed at intervals along the length direction of one side of the upper shell 213 to form a longitudinally elongated receiving groove for receiving the second antenna 23 when it is not in use. In some embodiments, if it is used under conditions where there is no requirement for protection against rain or other protective requirements, the upper shell 213 can also be omitted.

As shown in FIGS. 27 to 29 again, in some embodiments, the air guidance assembly 216 can include an air guidance inner cover 2161 integrally connected to the upper shell body 2131 and an air guidance outer cover 2162 covering the air guidance inner cover 2161. An air guidance cavity is formed between the air guidance inner cover 2161 and the air guidance outer cover 2162.

In some embodiments, multiple air guidance tubes 2163 are formed at intervals on the surface of the air guidance inner cover 2161 that faces the air guidance outer cover 2162. Each air guidance tube 2163 defines a longitudinally elongated air guidance hole, which connects the air guidance cavity of the air guidance assembly 216 with the inner cavity of the shell 21. In some embodiments, the air guidance tubes 2163 can be arranged vertically on the surface of the air guidance inner cover 2161 that faces the air guidance outer cover 2162. It can be understood that the air guidance tubes 2163 are not limited to being arranged vertically. In some embodiments, they can also be arranged in an inclined manner.

In some embodiments, multiple air guidance tubes 2164 are formed at intervals on the surface of the air guidance outer cover 2162 that faces the air guidance inner cover 2161. Each air guidance tube 2164 defines a longitudinally elongated air guidance hole, which connects the air guidance cavity of the air guidance assembly 216 with the ambient air, and these air guidance tubes 2164 are respectively arranged in a staggered manner with multiple air guidance tubes 2163 to improve the waterproof ability of the air guidance assembly 216. In some embodiments, the air guidance tubes 2164 can be arranged vertically on the surface of the air guidance outer cover 2162 that faces the air guidance inner cover 2161. It can be understood that the air guidance tubes 2164 are not limited to being arranged vertically. In some embodiments, they can also be arranged in an inclined manner.

In some embodiments, multiple protrusions 2165 are also formed on the surface of the air guidance outer cover 2162 that faces the air guidance inner cover 2161. These protrusions 2165 are respectively provided opposite to these air guidance tubes 2163. In some embodiments, multiple drainage holes 2166 are provided at intervals on the periphery of the air guidance outer cover 2162, so as to drain the liquid that enters the air guidance assembly 216, thereby further improving the waterproof performance of the air guidance assembly 216. It should be noted that, the drainage holes 2166 provided on the periphery of the air guidance outer cover 2162, specially provided on the upper and lower sides, are beneficial for the antenna module 20 to drain the liquid both in the stowed state and the working state. Because when in the stowed state and the working state, the positions of the upper and lower sides of the air guidance outer cover 2162 will be reversed. The drainage holes 2166 on the left and right sides of the air guidance outer cover 2162 can facilitate drainage when the device is placed sideways.

In some embodiments, the drainage holes 2166 on the upper and lower sides of the periphery of the air guidance outer cover 2162 are staggered with the air guidance tubes 2164, so that it can play a role in preventing water droplets from entering the air guidance cavity of the antenna module 20 to a certain extent. Wherein the drainage holes 2166 on the upper and lower sides of the periphery of the air guidance outer cover 2162 refer to the drainage holes on the two opposite peripheries provided along the length direction.

In some embodiments, these air guidance tubes 2163 can be arranged into multiple columns, and each column of air guidance tubes 2163 forms an air guidance unit. In some embodiments, these air guidance tubes 2164 can also be arranged into multiple columns, and each column of air guidance tubes 2164 forms an air guidance unit. These air guidance tubes 2163 and these air guidance tubes 2164 can also be arranged in a staggered manner between the air guidance units.

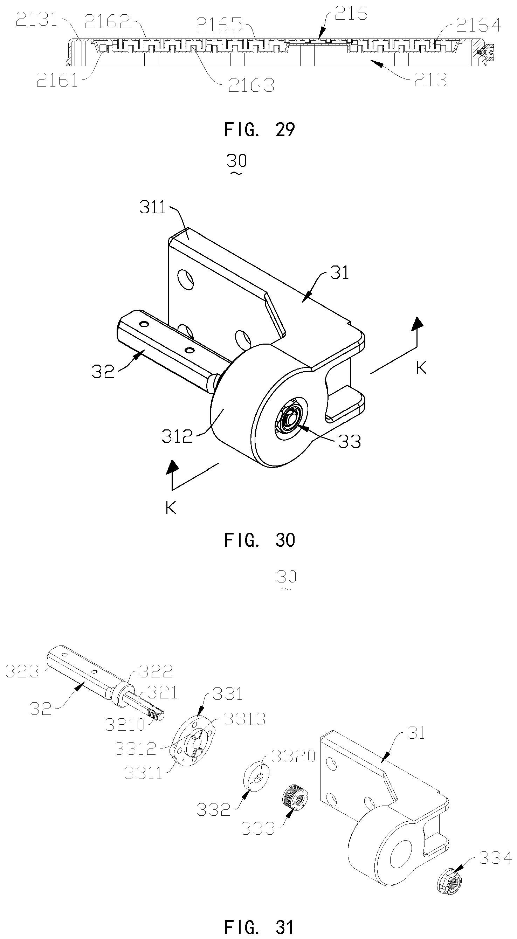

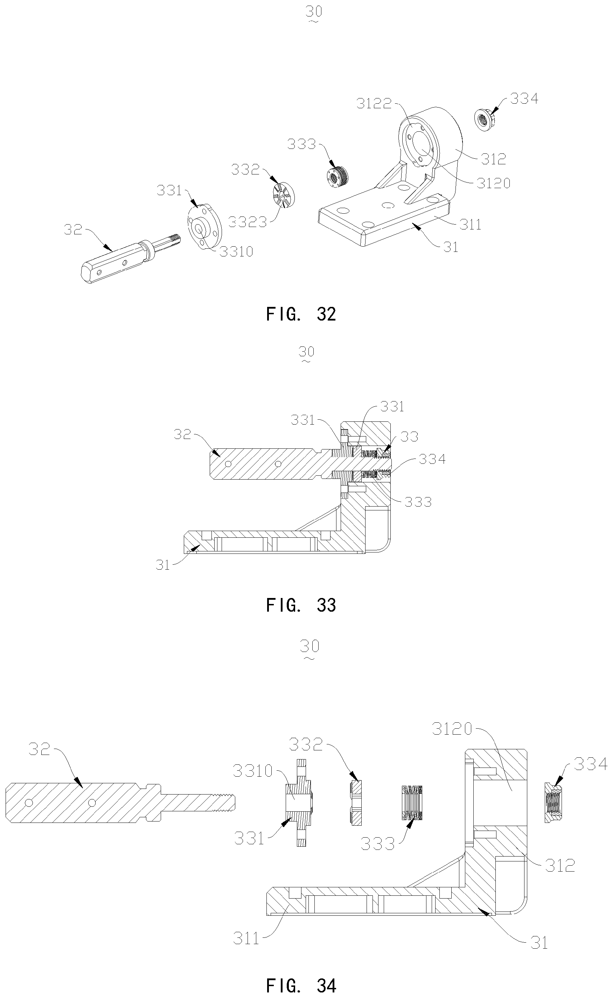

Referring to FIGS. 30 to 34 together, in some embodiments, the rotational connecting assembly 30 can include a connecting base 31 fixed in the host 10, a rotation shaft 32 rotatably passed through the connecting base 31 and fixed to the antenna module 20, and a retaining mechanism 33 connected between the rotation shaft 32 and the connecting base 31. The retaining mechanism 33 enables the connecting base 31 and the rotation shaft 32 to have a certain amount of friction when they rotate relatively from 0 degrees to 180 degrees, so that the rotational connecting assembly 30 has a damping effect to prevent the antenna module 20 from opening and closing too quickly relative to the host 10. It can be understood that, in some embodiments, the connecting base 31 can also be fixed in the antenna module 20 while the rotation shaft 32 is fixed to the host 10.

In some embodiments, the retaining mechanism 33 enables the rotational connecting assembly 30 to have a increased resistance position respectively when the antenna module 20 is at 0 degrees (the folded state shown in FIG. 1), 90 degrees (the first use state shown in FIG. 4), and 180 degrees (the second use state shown in FIG. 5) relative to the host 10. This is to ensure that at these positions, it can sufficiently resist the torsion generated by the gravity of the antenna module 20 and keep the antenna module 20 in these positions. The retaining mechanism 33 also provides feedback for each of the above increased resistance positions. The feedback at the above three angles can be manifested as tactile feedback (for example, a significant increase in damping force), or auditory feedback (for example, an audible click sound), etc., so as to prompt the user that the rotation is in place. In some embodiments, the 90-degree position of the antenna module 20 is particularly suitable for the assembly of the signal transmission assembly 40.

In some embodiments, the connecting base 31 can include a base 311 and an installation part 312 erected on the base 311. The installation part 312 includes an installation hole 3120 and an installation groove 3122 coaxially formed on the periphery of one end of the installation hole 3120 close to the bushing 218. The installation hole 3120 is used for the rotation shaft 32 to pass through, and its axis can be parallel to the plane where the base 311 is positioned. The installation groove 3122 is used for the fixed disk 331 of the retaining mechanism 33 to be embedded therein, and the diameter of the installation groove 3122 is larger than that of the installation hole 3120.

In some embodiments, the rotation shaft 32 can include a first shaft section 321, a second shaft section 322 and a third shaft section 323 that are connected in sequence. The first shaft section 321 is rotatably passed through the installation hole 3120 of the connecting base 31, and the diameter of the first shaft section 321 is smaller than the diameter of the installation hole 3120. The two opposite sides of the first shaft section 321 are flattened, so that its cross-section is non-circular; the free end of the first shaft section 321 can also be formed with a threaded structure 3210. The cross-section of the second shaft section 322 is circular, and its diameter is larger than that of the first shaft section 321. The third shaft section 323 is passed through the antenna module 20 and can also have a non-circular cross-section so as to be fixedly connected to the antenna module 20.

In some embodiments, the retaining mechanism 33 can include a fixed disk 331 fixed on the connecting base 31, a movable disk 332, an elastic member 333 and a locking fastener 334. The free end of the first shaft section 321 of the rotation shaft 32 is sequentially passed through the fixed disk 331, the movable disk 332 and the elastic member 333 and is locked together with the locking fastener 334. The movable disk 332, the elastic member 333 and the locking fastener 334 can all be positioned in the installation hole 3120. The elastic member 333 is clamped between the movable disk 332 and the locking fastener 334 and is used to apply an axial elastic force to the movable disk 332 so that the force tightly abuts against the fixed disk 331. The movable disk 332 and the fixed disk 331 are closely attached together, providing a damping force for the rotation between the connecting base 31 and the rotation shaft 32.

The fixed disk 331 is fixed on the installation part 312 of the connecting base 31 and covers one end of the installation hole 3120 of the installation part 312 close to the second shaft section 322. In some embodiments, the fixed disk 331 includes a cylindrical base part 3311, a cylindrical mating part 3312 coaxially connected to the base part 3311, and a circular central through-hole 3310 that axially penetrates the base part 3311 and the mating part 3312 in sequence. The base part 3311 is fixed in the installation groove 3122 of the installation part 312, and the mating part 3312 extends into the installation hole 3120 and abuts against the movable disk 332. A pair of concentric convex teeth 3313 are formed on the end surface of the mating part 3312 that faces the movable disk 332. The pair of convex teeth 3313 deviate from the center of the end surface and are distributed on the end surface in a circular array to mesh with the movable disk 332. The two opposite sides of each convex tooth 3313 are processed into a streamlined shape to prevent jamming between the convex tooth 3313 and the movable disk 332. In some embodiments, the convex teeth 3313 may be sector-shaped and concentric with the end surface.

The movable disk 332 is sleeved on the first shaft section 321 and can move back and forth along the axial direction of the first shaft section 321 in the installation hole 3120. The diameter of the movable disk 332 is fitted with the diameter of the installation hole 3120. The rotation of the movable disk 332 in the circumferential direction relative to the first shaft section 321 is restricted by the first shaft section 321, so that the movable disk 332 can rotate synchronously with the first shaft section 321. Specifically, the movable disk 332 includes a non-circular through-hole 3320 for the first shaft section 321 to pass through. The shape and size of the through-hole 3320 are fitted with the shape and size of the first shaft section 321, so that the rotation of the movable disk 332 in the circumferential direction relative to the first shaft section 321 is prevented. In some embodiments, four concentric sector-shaped clamping grooves 3323 can be formed on the end surface of the movable disk 332 opposite to the mating part 3312 of the fixed disk 331. These clamping grooves 3323 deviate from the center of the end surface and are distributed on this end surface of the movable disk 332 in a circular array. The shape and size of each clamping groove 3323 are fitted with the shape and size of the convex teeth 3313 of the fixed disk 331, so that the pair of convex teeth 3313 of the fixed disk 331 can selectively cooperate with the four clamping grooves 3323 of the movable disk 332 to achieve the effect of meshing once every 90-degree rotation.The two opposite side edges of each clamping groove 3323 can be processed into a streamlined shape. When the movable disk 332 is subjected to a certain torque from an external force, after the side edges where the convex teeth 3313 and the clamping grooves 3323 abut against each other interact, a resolved force on the movable disk 332 in the direction away from the fixed disk 331 can be generated. When this resolved force is greater than the axial elastic force exerted on the movable disk 332 by the elastic member 333, it can drive the disengagement of the meshing between the movable disk 332 and the fixed disk 331, so that the movable disk 332 can rotate relative to the fixed disk 331 again. The settings of the convex teeth 3313 and the clamping grooves 3323 add several increased resistance positions to the rotation between the connecting base 31 and the rotation shaft 32.

It can be understood that, in order to achieve meshing once every 90-degree rotation, the four clamping grooves 3323 can also be provided on the fixed disk 331, while the two convex teeth 3313 are provided on the movable disk 332. Understandably, in some cases, if it is required to achieve meshing every other angle of rotation, it can be realized by changing the number of the clamping grooves 3323. For example, by evenly arranging six clamping grooves 3323, the effect of meshing every 60-degree rotation can be achieved. It can be understood that the number of the convex teeth 3313 is not limited to two. In some situations, one or more than two convex teeth can also be applicable.

In some embodiments, the elastic member 333 can be realized by axially stacking multiple disc springs together, which has the advantages of occupying a small space and providing a large axial elastic force. Of course, the elastic member 333 can also be realized by using other types of elastic elements such as columnar springs. In some embodiments, the locking fastener 334 can be a nut, which is screwed onto the free end of the first shaft section 321 of the rotation shaft 32 and presses against the end of the elastic member 333 that is away from the movable disk 332.

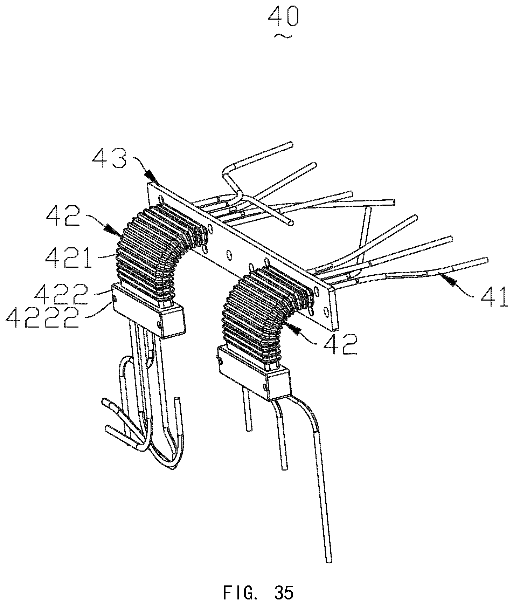

As shown in FIGS. 35 to 38, in some embodiments, the signal transmission assembly 40 could include multiple signal wires 41, a pair of protective sleeves 42 and a pressure plate 43. One end of each of these signal wires 41 is connected to a functional module 122 in the host 10, and the other end is connected to a first antenna 22 in the antenna module 20, so as to achieve signal transmission. In some embodiments, these signal wires 41 can be divided into two groups, and a protective sleeve 42 is sleeved on the part of each group of signal wires 41 between the antenna module 20 and the host 10 to protect the signal wires 41 and prevent this part of the signal wires 41 from being accelerated in aging due to exposure to the sun and rain. It can be understood that the signal transmission assembly 40 is not limited to using radio-frequency lines to achieve the communication between the antenna module 20 and the host 10. In some embodiments, it can also be implemented by using radio-frequency rotary joints.

In some embodiments, each protective sleeve 42 can be integrally made of soft materials such as silica gel. It can include a tubular sleeve body 421 and heads 422 and 423 respectively connected to the two ends of the sleeve body 421. In some embodiments, the sleeve body 421 can be a corrugated pipe so as to have good repeated bending performance.

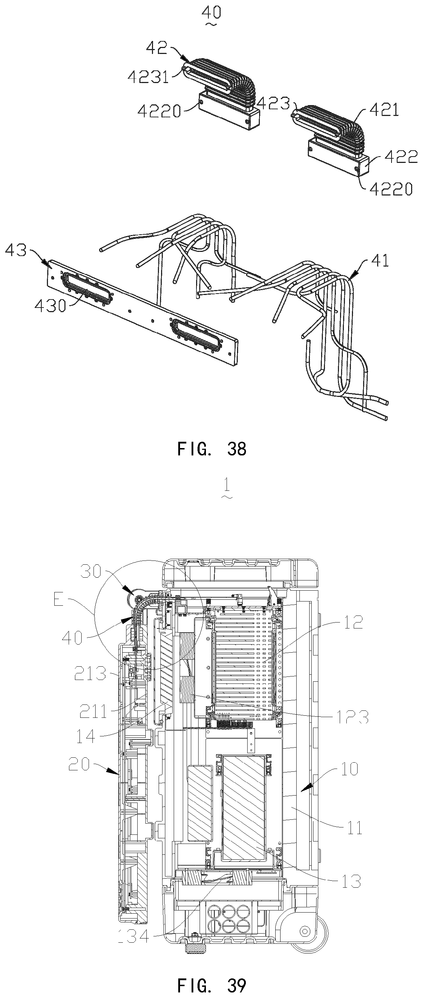

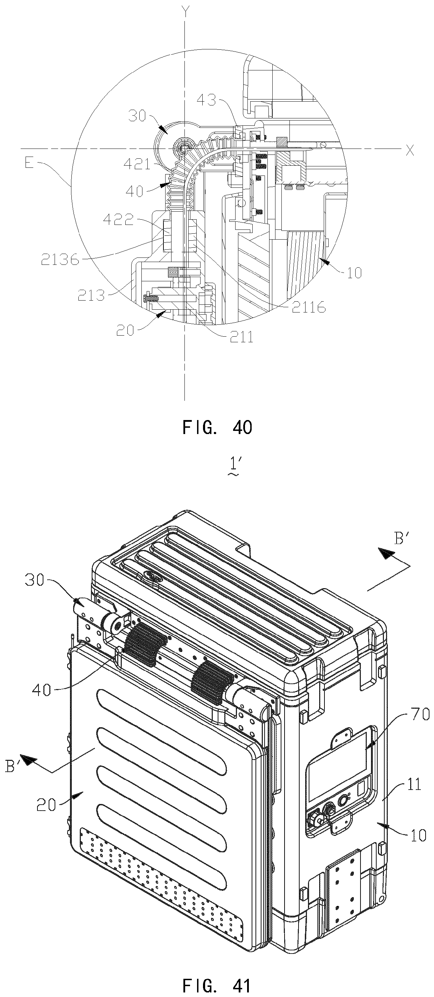

Referring to FIGS. 39 and 40 together, in some embodiments, the head 422 can be in the shape of a cuboid. Its lower side and upper side are respectively embedded in the corresponding first accommodating groove 2116 of the lower shell 211 and the corresponding second accommodating groove 2136 of the upper shell 213, so as to achieve the sealed and fixed connection between the head 422 and the shell 21. The first accommodating groove 2116 and the second accommodating groove 2136 together form a cuboid-shaped accommodating cavity. The junction between the sleeve body 421 and the head 422 is passed through the corresponding wiring hole 210 of the shell 21. The lower side of the head 422 is provided with a pair of first location holes 4220, and the upper side is provided with a pair of second location holes 4222. The pair of first location holes 4220 are respectively sleeved on the first location columns 2117 at the bottom of the first accommodating groove 2116, and the pair of second location holes 4222 are respectively sleeved on the second location columns 2137 at the bottom of the second accommodating groove 2136, so as to increase the tightness of the combination between the head 422 and the shell 21.

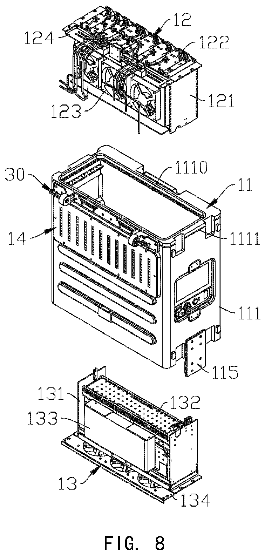

In some embodiments, the head 423 can be in an annular shape. It can be passed through the pressure plate 43 and be fixed at the outlet of the wiring hole 1114 of the host 10 by the pressure plate 43 to achieve a sealed connection between the head 423 and the host 10. In some embodiments, the head 423 can include a pair of positioning protrusions 4231. The pair of positioning protrusions 4231 are respectively formed on the two opposite sides of the end surface of the head 423 and are used to be embedded into the annular groove 1111 on the outer surface of the housing 11 of the host 10 (as shown in FIG. 8). In some embodiments, the pressure plate 43 can include a pair of clamping holes 430 for the heads 423 of the pair of protective sleeves 42 to be clamped into respectively. The pressure plate 43 can be fixed onto the housing 11 by locking fasteners such as screws.

As shown in FIG. 40 again, in some embodiments, the direction X in which each signal wire 41 is routed out from the host 10 and the direction Y in which the signal wire 41 is routed out from the antenna module 20 are coplanar and intersect at the rotation axis around which the antenna module 20 flips relative to the host 10. When the antenna module 20 is at 90 degrees relative to the host 10, the signal wires 41 are close to a straight line, which is especially suitable for the assembly of the signal transmission assembly 40 at this time.

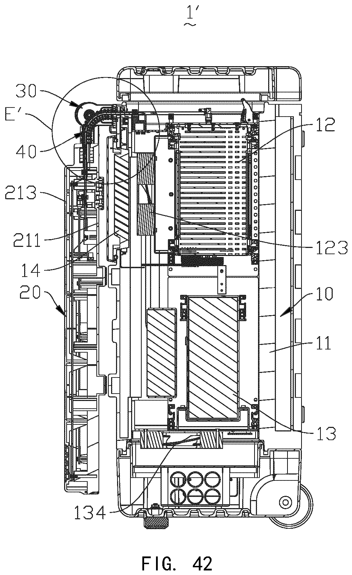

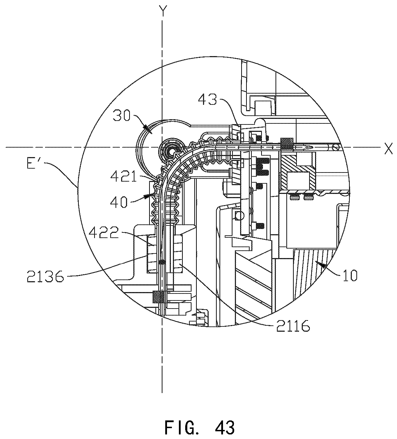

FIG. 41 shows a portable frequency jammer 1' in some other embodiments of the present invention. Its structure is basically the same as that of the above-mentioned portable frequency jammer 1, and the main differences between them are described as follows:
Referring to FIGS. 42 and 43 together, the direction X in which each signal wire 41 is routed out from the host 10 and the direction Y in which the signal wire 41 is routed out from the antenna module 20 are coplanar, but they do not intersect at the rotation axis around which the antenna module 20 flips relative to the host 10. Instead, they intersect near the rotation axis around which the antenna module 20 flips relative to the host 10. At this time, when the antenna module 20 is at 90 degrees relative to the host 10, the signal wires 41 are close to a straight line, and it is also relatively suitable for the assembly of the signal transmission assembly 40 at this time.

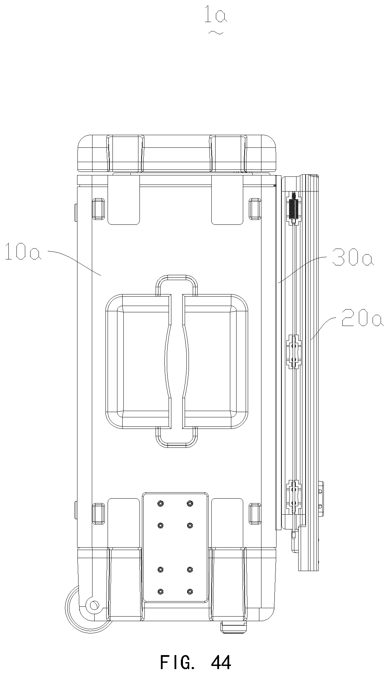

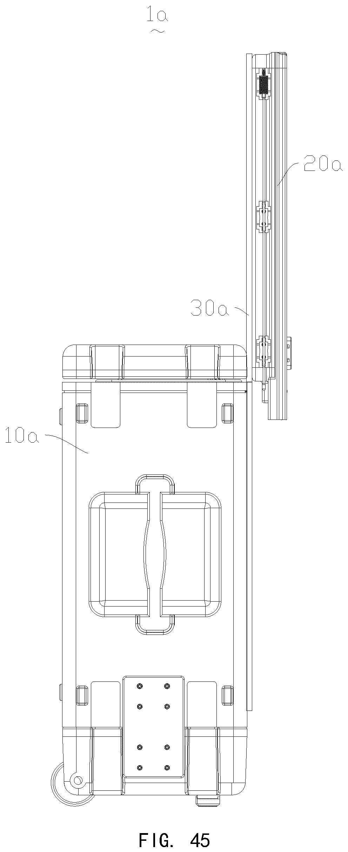

FIGS. 44 and 45 show a portable frequency jammer 1a in some other embodiments of the present invention. The portable frequency jammer 1a includes a host 10a, an antenna module 20a, and a sliding rail assembly 30 that slidably connects the antenna module 20a to the host 10a. The host 10a and the antenna module 20a are also communicatively connected via signal wires. The antenna module 20a can be transitioned back and forth between the stowed state shown in FIG. 44 and the working state shown in FIG. 45, and can also achieve the purposes of eliminating the need for repeated disassembly and assembly of the antennas and hiding each antenna. The internal structure of the host 10a is similar to that of the above-mentioned host 10, and the structure of the antenna module 20a is similar to that of the above-mentioned antenna module 20. Neither of them will be repeated here.

It should be noted that for the portable frequency jammer, especially the trolley-case-style frequency jammer, in addition to the movable connection implementation methods such as the flipping connection between the antenna module 20 and the host 10 and the sliding connection between the antenna module 20a and the host 10a described in the above-mentioned embodiments, based on the technical disclosure of the present invention, as long as the first antennas 22 are integrated into the cavity of the shell 21 to form the antenna module 20, and the antenna module 20 is positioned outside the host 10 and integrally connected with the host 10, all appropriate modified designs should fall within the protection scope of the present invention.

It can be understood that the above-mentioned various technical features can be used in any combination without restrictions.

The aforementioned descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A portable frequency jammer, comprising:
a host, comprising:
a housing; and
a functional module assembly, provided in the housing, comprising at least one functional module for generating an interference signal within at least one frequency band; and
an antenna module, positioned outside the housing and integrally connected to the host, comprising:
at least one first antenna, communicatively connected to the at least one functional module to transmit the interference signal.

2. A portable frequency jammer according to claim 1, wherein the antenna module is movably connected to the housing.

3. A portable frequency jammer according to claim 2, wherein the antenna module is movably connected to the host, and transitioned back and forth between at least one working state and one stowed state relative to the host.

4. A portable frequency jammer according to claim 3, wherein the antenna module is flipably connected to the host.

5. A portable frequency jammer according to claim 3, wherein the antenna module is slidably connected to the host.

6. A portable frequency jammer according to claim 3, wherein the at least one functional module comprises multiple functional modules for generating interference signals within different frequency bands; the antenna module comprises a shell movably connected to the host, the at least one first antenna comprises multiple first antennas, the multiple first antennas are provided in the shell, and communicatively connected with the multiple functional modules respectively.

7. A portable frequency jammer according to claim 6, wherein some or all of the multiple first antennas are microstrip antennas or printed circuit board patch antennas.

8. A portable frequency jammer according to claim 7, wherein the multiple first antennas are arranged in parallel and at intervals within the shell.

9. A portable frequency jammer according to claim 8, wherein the multiple first antennas are arranged in a staggered manner in height in the shell.

10. A portable frequency jammer according to claim 6, wherein the antenna module comprises at least one second antenna, the at least one second antenna is detachably or non-detachably connected to the shell, and communicatively connected to at least one of the multiple first antennas.

11. A portable frequency jammer according to claim 10, wherein a thickness of an inner cavity of the shell is less than or equal to 50mm.

12. A portable frequency jammer according to claim 6, wherein the multiple first antennas are all in the shape of rectangular sheets, and the multiple first antennas are arranged in parallel and at intervals along a width direction of the shell.

13. A portable frequency jammer according to claim 10, wherein the shell comprises an antenna connector, the antenna connector is provided on a top side of the shell, the antenna module comprises a second antenna, the second antenna is provided on the outside of the shell, and detachably communicatively connected to the antenna connector.

14. A portable frequency jammer according to claim 10, wherein the antenna connector is connected to a first antenna with the lowest frequency band within the shell; and the second antenna is in a columnar shape.

15. A portable frequency jammer according to claim 13, wherein the shell comprises several clamping members, the several clamping members are distributed at intervals along a length direction of one side of the outside of the shell to form a longitudinally elongated receiving groove for receiving the second antenna when the portable frequency jammer is not in use.

16. A portable frequency jammer according to claim 6, wherein the shell comprises a lower shell and an upper shell provided opposite to the lower shell, multiple support assemblies are formed on a surface of the lower shell opposite to the upper shell, and the multiple first antennas are fixed on the multiple support assemblies respectively.

17. A portable frequency jammer according to claim 16, wherein heights of the multiple support assemblies are not equal.

18. A portable frequency jammer according to claim 17, wherein each support assembly comprises multiple support columns arranged at intervals.

19. A portable frequency jammer according to claim 6, wherein the portable frequency jammer comprises a signal transmission assembly, the antenna module is communicatively connected to the host through the signal transmission assembly; the signal transmission assembly comprises multiple signal wires, and the multiple signal wires communicatively connect the multiple functional modules to the multiple first antennas respectively.

20. A portable frequency jammer according to claim 19, wherein the shell comprises at least one wire clamp and at least one first wiring hole, the at least one first wiring hole is provided on a bottom side of the shell, the at least one wire clamp is installed in the shell, and corresponds to the at least one first wiring hole, the at least one wire clamp tightly clamps the multiple signal wires, and the multiple signal wires are passed through the first wiring hole and communicatively connected to the multiple functional modules.

21. A portable frequency jammer according to claim 19, wherein a direction in which each signal wire is routed out from the host and a direction in which each signal wire is routed out from the antenna module are coplanar and intersect or do not intersect at a rotation axis around which the antenna module flips relative to the host.

22. A portable frequency jammer according to claim 21, wherein the signal wires are configured that the signal wires are close to a straight line when the antenna module is at 90 degrees relative to the host.

23. A portable frequency jammer according to claim 20, wherein the signal transmission assembly comprises at least one protective sleeve sleeved on the multiple signal wires, the at least one protective sleeve is sealed in a waterproof manner at one end to the host, and sealed in a waterproof manner at another end to the antenna module.

24. A portable frequency jammer according to claim 23, wherein the housing comprises a second wiring hole; one end of the multiple signal wires is passed through the second wiring hole and connected to the functional module assembly, another end of the multiple signal wires is passed through the first wiring hole and connected to the multiple first antennas; one end of the at least one protective sleeve is fixed on the housing and covers the second wiring hole, and another end is fixed on the shell and covers the first wiring hole.

25. A portable frequency jammer according to claim 24, wherein the at least one protective sleeve comprises a first head and a second head, the first head is in an annular shape and covers the second wiring hole, an accommodating cavity for the second head to be embedded in is formed in the shell, and the accommodating cavity corresponds to the first wiring hole.

26. A portable frequency jammer according to claim 25, wherein the signal transmission assembly further comprises a pressure plate installed on the housing, the pressure plate comprises at least one clamping hole, the first head is passed through the at least one clamping hole, and clamped between the pressure plate and the housing.

27. A portable frequency jammer according to claim 25, wherein the first head comprises a pair of positioning protrusions, the pair of positioning protrusions are respectively formed on two opposite sides of an end surface of the first head and are used to be embedded into an annular groove on an outer surface of the housing of the host.

28. A portable frequency jammer according to claim 27, wherein the shell comprises an upper shell and a lower shell that cooperates with the upper shell, first wiring grooves and first accommodating grooves are formed on one side of the lower shell, second wiring grooves and second accommodating grooves are formed on a corresponding side of the upper shell; the first wiring grooves and the second wiring grooves are combined together with their openings facing each other to form the first wiring hole, the first accommodating grooves and the second accommodating grooves are combined together with their openings facing each other to form the accommodating cavity;
bottoms of the first accommodating grooves and/or bottoms of the second accommodating grooves are respectively provided with location columns; an upper side or lower side of the second head is provided with location holes, and the location holes correspond to the location columns.

29. A portable frequency jammer according to claim 16, wherein the lower shell comprises a lower shell body and the multiple support assemblies formed on a surface of the lower shell body opposite to the upper shell.

30. A portable frequency jammer according to claim 29, wherein the upper shell comprises an upper shell body, multiple support columns formed on a surface of the upper shell body opposite to the lower shell body, and an annular groove formed on an end surface of the peripheral sidewall of the upper shell body, the support columns abut against a bottom wall of the lower shell body to increase the compressive capacity of the shell,and the annular groove is used for embedding a seal.

31. A portable frequency jammer according to claim 30, wherein the annular groove is configured to be entirely positioned on an inner side of all locking holes on an end surface of a surrounding wall of the upper shell body.

32. A portable frequency jammer according to claim 16, wherein the lower shell further comprises one or both of a buffer strip and a magnetic attraction element, the magnetic attraction element is configured to be magnetically attracted and combined with a magnetic attraction element of the host when the antenna module is in a stowed state relative to the host, the buffer strip is provided on a back of the lower shell, and is configured to be more stable when attached to the host.

33. A portable frequency jammer according to claim 6, wherein the shell comprises at least two air guidance assemblies, the at least two air guidance assemblies are provided at an upper part and a lower part of the shell respectively, and respectively connect an inner cavity of the shell with ambient air.

34. A portable frequency jammer according to claim 33, wherein the at least two air guidance assemblies are respectively provided on two opposite side walls of the shell; at least one air guidance assembly comprises an air guidance inner cover and an air guidance outer cover combined face-to-face onto the air guidance inner cover, and an air guidance cavity is formed between the air guidance inner cover and the air guidance outer cover.

35. A portable frequency jammer according to claim 34, wherein the air guidance outer cover comprises a first surface opposite to the air guidance inner cover, the air guidance inner cover comprises a second surface opposite to the air guidance outer cover, multiple first air guidance tubes extending towards the first surface are formed on the second surface; multiple second air guidance tubes extending towards the second surface are formed on the first surface, the multiple second air guidance tubes are arranged in a staggered manner with the multiple first air guidance tubes, and a distance from the first surface to the second surface is less than the sum of lengths of the first air guidance tube and the second air guidance tube.

36. A portable frequency jammer according to claim 35, wherein multiple protrusions protruding towards the second surface are formed on the first surface, the multiple protrusions are respectively provided opposite to and spaced from the multiple first air guidance tubes; and the air guidance outer cover is provided with drainage ports at least on a top side edge and a bottom side edge.

37. A portable frequency jammer according to claim 4, wherein the portable frequency jammer comprises a rotational connecting assembly, the antenna module is connected to the host through the rotational connecting assembly, and the rotational connecting assembly comprises at least two angle retaining positions.

38. A portable frequency jammer according to claim 37, wherein the rotational connecting assembly comprises a connecting base, a rotation shaft rotatably passed through the connecting base and a retaining mechanism, the retaining mechanism is connected between the connecting base and rotation shaft, and configured to provide an elastic retaining force for keeping the rotation shaft at the at least two angle retaining positions relative to the connecting base.

39. A portable frequency jammer according to claim 38, wherein the retaining mechanism comprises a fixed disk, a movable disk and an elastic member, the fixed disk is fixed on the connecting base, the rotation shaft is rotatably passed through the fixed disk; the movable disk is sleeved on the rotation shaft and moves back and forth along an axial direction of the rotation shaft, and abuts against the fixed disk, the movable disk is fixed in a circumferential direction relative to the rotation shaft; the elastic member abuts against the movable disk, and is configured to provide an elastic retaining force for the movable disk to keep it in a tightly-abutted state with the fixed disk; the fixed disk comprises a first surface that abuts against the movable disk, the movable disk comprises a second surface that abuts against the first surface, at least one convex tooth deviated from a center is formed on one of the first surface and the second surface, at least two clamping grooves deviated from a center are formed on the other of the first surface and the second surface, and the at least two clamping grooves are for the at least one convex tooth to be selectively embedded.

40. A portable frequency jammer according to claim 39, wherein two opposite sides of the at least one convex tooth are processed into a streamlined shape; two opposite sides of each clamping groove are both processed into a streamlined shape; the at least one convex tooth is sector-shaped, and concentric with one of the first surface and the second surface; each clamping groove is sector-shaped, and concentric with the other of the first surface and the second surface.

41. A portable frequency jammer according to claim 39, wherein the at least one convex tooth comprises two convex teeth, the two convex teeth are distributed on one of the first surface and the second surface in a circular array; the at least two clamping grooves comprise four clamping grooves, the four clamping grooves are distributed on the other of the first surface and the second surface in a circular array.

42. A portable frequency jammer according to claim 39, wherein the elastic member comprises at least one disc spring sleeved on the rotation shaft, the at least one disc spring tightly abuts against a side of the movable disk away from the fixed disk; the retaining mechanism further comprises a locking fastener sleeved on the rotation shaft, and the locking fastener tightly abuts against a side of the at least one disc spring away from the fixed disk.

43. A portable frequency jammer according to claim 37, wherein the at least two angle retaining positions respectively comprise a 0-degree retaining position, a 90-degree retaining position, and a 180-degree retaining position, and at the 90-degree retaining position, the antenna module is perpendicular to the host.

44. A portable frequency jammer according to claim 4, wherein the portable frequency jammer comprises an anti-tipping mechanism to provide auxiliary support for the host.

45. A portable frequency jammer according to claim 44, wherein the housing comprises a wheel, the wheel and anti-tipping mechanism are installed on a bottom surface of the housing, and respectively positioned at two opposite ends of the bottom surface of the housing, the anti-tipping mechanism comprises blocking bars,the blocking bars are rotatably connected to an end of the bottom surface of the housing that is opposite to the wheel around a longitudinal axis, the blocking bars are completely folded to a bottom surface of the host when not in use, and rotated to protrude from a side surface of the host where the antenna module is positioned when in use, so as to increase the stability of the portable frequency jammer during operation.

46. A portable frequency jammer according to claim 4, wherein the host comprises a power supply assembly, the power supply assembly is provided in the housing, positioned below the functional module assembly, and detachably electrically connected to the functional module assembly so as to supply power for the functional module assembly.

47. A portable frequency jammer according to claim 46, wherein the housing comprises a housing body, an upper cover and a lower cover; the housing body comprises an upper opening end and a lower opening end opposite to the upper opening end; the upper cover is connected to the upper opening end in an openable and closable manner; and the lower cover is connected to the lower opening end in an openable and closable manner.

48. A portable frequency jammer according to claim 47, wherein the functional module assembly is provided in an upper space of the housing body, and its wiring surface faces the upper opening end to facilitate wiring with the antenna module; and the power supply assembly is provided in a lower space of the housing body.

49. A portable frequency jammer according to claim 48, wherein when assembling the host: the functional module assembly is inserted downward from the upper opening end into the upper space of the housing body; the power supply assembly is inserted upward from the lower opening end into the lower space of the housing body.

50. A portable frequency jammer according to claim 47, wherein the functional module assembly comprises at least one first connector facing downwards; the power supply assembly comprises at least one second connector facing upwards, and the at least one second connector is detachably plugged with the at least one first connector to electrically connect the power supply assembly to the functional module assembly.

51. A portable frequency jammer according to claim 50, wherein an alignment mechanism is provided between the functional module assembly and the power supply assembly, to make the first connector and the second connector be aligned when plugging.

52. A portable frequency jammer according to claim 50, wherein the functional module assembly comprises an insertion frame and multiple functional modules detachably plugged in the insertion frame; the insertion frame comprises a functional module management board provided at a bottom of the insertion frame, the at least one first connector is provided on the functional module management board; the power supply assembly comprises a power management board, and the at least one second connector is provided on the power management board.

53. A portable frequency jammer according to claim 52, wherein a surface of the functional module management board facing the multiple functional modules is provided with multiple electrical sockets for the multiple functional modules to be electrically inserted therein respectively, the functional module management board is configured for providing any one or more functions of an interaction and distribution of signals among various functional modules, power supply and clock signals; and the power management board is configured to manage charging and distribution of power.

54. A portable frequency jammer according to claim 53, wherein the multiple functional modules comprise multiple interference signal generation modules, a signal receiving module and a main control board, the multiple interference signal generation modules are used to generate interference signals in different frequency bands, the signal receiving module is used to receive signals from base stations, the multiple interference signal generation modules, the signal receiving module and the main control board are inserted into the insertion frame in a plug-in manner.

55. A portable frequency jammer according to claim 53, wherein the host further comprises an air guidance assembly, an exhaust port is provided on a side wall of the housing body facing the antenna module near the functional module assembly, so that the air guidance assembly is installed in it.

56. A portable frequency jammer according to claim 55, wherein the functional module assembly further comprises a first fan assembly, the first fan assembly is arranged on a side of the insertion frame close to the exhaust port, and an air intake side is directly opposite airflow channels of multiple functional modules, an air exhaust side is directly opposite the exhaust port, to drive cooling air to flow through the airflow channels between the functional modules, cool the functional modules, and then be discharged out of the housing through the exhaust port.

57. A portable frequency jammer according to claim 56, wherein the functional module assembly further comprises a wire organizer, the wire organizer shields a gap between a top of the insertion frame and a side wall of the housing, so that more cooling air passes through the functional modules.

58. A portable frequency jammer according to claim 57, wherein the housing body comprises a second wiring hole; the wire organizer comprises a substrate and a wire clamp provided on a top surface of the substrate; a long side of the substrate is connected to a side of a top of the insertion frame close to the second wiring hole, and is adjacent to the second wiring hole, the wire clamp corresponds to the second wiring hole, the wire clamp is used to clamp signal wires, the signal wires are passed through the second wiring hole, and the signal wires are used to communicatively connect the multiple functional modules with multiple first antennas.

59. A portable frequency jammer according to claim 58, wherein the host further comprises a reinforcing member, the reinforcing member is provided on an inner surface of a side wall of the housing or in an interlayer of the side wall, and comprises a first reinforcing part distributed around the exhaust port and a second reinforcing part distributed around the second wiring hole, wherein the first reinforcing part and the second reinforcing part are used to strengthen the strength around the exhaust port of the housing.

60. A portable frequency jammer according to claim 59, wherein the reinforcing member further comprises a shielding part that shields a gap between the power supply assembly and a side wall of the housing where the second wiring hole is positioned, the shielding part is used to increase the strength of the reinforcing member, and also to shield a gap between the functional module assembly and an inner wall of the housing, allowing heat dissipation airflow to flow through the functional module assembly in a more concentrated manner so as to improve the heat dissipation efficiency.

61. A portable frequency jammer according to claim 59, wherein the host further comprises first brackets and second brackets, the first brackets are provided near top ends on inner wall surfaces of side walls of the housing to support the functional module assembly; the second brackets are provided near bottom ends on inner wall surfaces of two opposite side walls of the housing to fix the power supply assembly.

62. A portable frequency jammer according to claim 52, wherein the power supply assembly further comprises a fixing frame, a power supply, a power adapter and a second fan assembly, the fixing frame is detachably installed in the housing, the power supply is detachably fixed in the fixing frame, the power adapter is detachably fixed on one side of the fixing frame, the second fan assembly is provided on a bottom surface of the fixing frame and is configured to blow cold air towards the power supply and the power adapter for cooling.

63. A portable frequency jammer according to claim 62, wherein the fixing frame comprises a first side frame, a second side frame, a third side frame, and a fourth side frame which are connected end to end in sequence, these side frames define an accommodating space for accommodating the power supply, the power management board is longitudinally provided between the first side frame and the power supply, a surface of the power management board that faces the power supply is also provided with a power interface, and the power interface is plugged together with the power supply.

64. A portable frequency jammer according to claim 63, wherein the power supply comprises a bracket assembly, a battery and a cover plate, the bracket assembly defines an accommodating space, the battery is closely accommodated within the accommodating space, the cover plate is combined with an opening end of the bracket assembly to lock the battery in the accommodating space, wherein the bracket assembly is U-shaped, and comprises a first bracket and a second bracket combined with the first bracket, the first bracket is in the shape of J-shaped plate, and the second bracket comprises a plate part.

65. A portable frequency jammer according to claim 1, wherein the portable frequency jammer is a trolley-case-style frequency jammer.

66. A portable frequency jammer according to claim 10, wherein when the portable frequency jammer is in operation, some or all of the second antenna is positioned outside the shell.

67. A portable frequency jammer according to claim 10, wherein when the second antenna is non-detachably connected to the shell, the second antenna is connected to the shell in a hinged manner or telescopically connected to the shell.
